# EUROPEAN PATENT SPECIFICATION

(11) **EP 4 600 940 B1**
(45) Date of publication and mention of the grant of the patent: **28.10.2026**
(21) Application number: 23927186.9
(22) Date of filing: 06.12.2023
(51) Int. Cl.: G09G 3/20, G09G 3/36

(54) **DISPLAY SCREEN CONTROL METHOD AND ELECTRONIC DEVICE**
ANZEIGEBILDSCHIRMSTEUERUNGSVERFAHREN UND ELEKTRONISCHE VORRICHTUNG
PROCÉDÉ DE COMMANDE D'ÉCRAN D'AFFICHAGE ET DISPOSITIF ÉLECTRONIQUE

(30) Priority: 16.03.2023 CN 202310273535
(43) Date of publication of application: 13.08.2025
(73) Proprietor: Honor Device Co., Ltd., Shenzhen, Guangdong 518040 (CN)
(72) Inventor: XIANG, Chao, Shenzhen, Guangdong 518040 (CN)
(74) Representative: Isarpatent
(86) International application number: PCT/CN2023/136874
(87) International publication number: WO 2024/187846

(56) References cited:
- CN-A- 105 321 486
- CN-A- 106 657 516
- CN-A- 111 933 071
- CN-A- 114 661 263
- JP-A- 2002 221 952
- US-A1- 2011 078 536
- US-A1- 2011 292 059
- US-A1- 2017 193 971

## Description

### TECHNICAL FIELD

This disclosure relates to the field of computer technologies, and in particular, the invention relates to a display control method and an electronic device.

### BACKGROUND

Panel self refresh (PSR) is a technology for reducing power consumption of an electronic device by dynamically adjusting a refresh rate of a display of the electronic device. However, in a process in which the electronic device starts operation of PSR, a problem of a black screen flicker usually occurs, which greatly affects user experience.

### SUMMARY

In view of this, the object of the present invention is to provide a display control method and an electronic device, to improve power consumption of a device and reduce a black screen flicker. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, the following technical solutions are used in embodiments of this application.

According to a first aspect according to the invention, an embodiment of this application provides a display control method, applied to an electronic device. The electronic device includes a first display, the first display supports panel self refresh, and the method includes: displaying a first interface in response to an operation of a user; displaying, by the electronic device, a first group of image frames in the first interface within a first time period, where all image frames in the first group of image frames have same content, and a refresh rate of the first display within the first time period is a first refresh rate; displaying a second interface in response to an operation of the user after the first time period; and displaying, by the electronic device, a second group of image frames in the second interface within a second time period, where a plurality of image frames in the second group of image frames have different content, a refresh rate of the first display within the second time period is a second refresh rate, and the second refresh rate is greater than the first refresh rate.

The first group of image frames includes an image frame displayed on the first display at each time point within the first time period. In some scenarios, the first group of image frames may be a part that is of a picture displayed on the first display and that does not include a toolbar. In other words, the first group of image frames is display data drawn on a panel of the first display.

For example, all the image frames in the first group of image frames have the same content, that is, the first display displays the static first interface within the first time period. For another example, most image frames in the first group of image frames have the same content, that is, the first display displays the static first interface during most of the first time period.

The second group of image frames includes an image frame displayed on the first display at each time point within the second time period. The plurality of image frames in the second group of image frames have different content. In some scenarios, the second group of image frames may be a part that is of a picture displayed on the first display and that does not include a toolbar.

For example, in the second group of image frames, a plurality of groups of image frames corresponding to adjacent time points have different content, that is, the second display displays the dynamic second interface within the second time period.

In the invention, when hardware of the first display supports a PSR function, even if the user does not manually adjust a refresh rate, the electronic device may maintain a relatively high refresh rate during display of the dynamic interface, to ensure that the electronic device does not freeze when normally displaying content. During display of the static interface, a relatively low refresh rate is used, to reduce energy consumption while ensuring that the electronic device normally displays content.

In addition, the first interface is displayed in response to an operation of the user after the second time period. The electronic device displays the first group of image frames in the first interface within a third time period, where a refresh rate of the first display within the third time period is a third refresh rate. During the third time period, the electronic device is located in space in which a first electromagnetic interference signal exists. The second interface is displayed in response to an operation of the user after the third time period. The electronic device displays the second group of image frames in the second interface within a fourth time period, where a refresh rate of the first display within the fourth time period is the third refresh rate, where during the fourth time period, the electronic device is located in the space in which the first electromagnetic interference signal exists, and the user does not modify the refresh rate of the first display between a start moment of the first time period and an end moment of the fourth time period.

In the invention, when the electronic device does not satisfy a first condition, the electronic device may enable the PSR function, to balance a display requirement and energy consumption. When the electronic device satisfies the first condition, the electronic device may automatically disable the PSR function. After the PSR function is disabled, regardless of whether the dynamic interface or the static interface is displayed, a refresh rate of the first display remains unchanged. In this way, it is avoided that the PSR function triggers self-check of the first display, thereby avoiding a black screen flicker.

In addition, the first condition is an environmental condition that can cause abnormal data transmission between a display and a GPU of the electronic device. For example, the first condition may include any one of the following:
(1) The electronic device enters a space environment in which the first electromagnetic interference signal exists. The first electromagnetic interference signal may have a signal frequency close to a first clock frequency, and the first clock frequency may be a data transmission frequency between the first display and the GPU. In addition, signal strength of the first electromagnetic interference signal is greater than a preset strength threshold, and the strength threshold may be an empirical value determined through a test. This is not limited in embodiments of this application.
(2) A third-party device performs charging by using an external interface provided by the electronic device.
(3) A bus between the first display and the GPU in the electronic device ages or loosens.

In the invention, the electronic device may control, due to impact of the first condition, refresh rates of the first display within both the third time period and the fourth time period to be the third refresh rate.

For example, based on impact of the first electromagnetic interference signal, the refresh rates of the first display within both the third time period and the fourth time period are the third refresh rate.

For example, if the electronic device encounters a CRC exception (that is, a CRC error) due to impact of the first electromagnetic interference signal, the electronic device may be triggered to disable the PSR function. In this way, the refresh rates of the first display within both the third time period and the fourth time period are the third refresh rate.

In the invention, the method further includes: displaying the first interface in response to an operation of the user after the fourth time period; displaying, by the electronic device, the first group of image frames in the first interface within a fifth time period, where a refresh rate of the first display within the fifth time period is the third refresh rate, where during the fifth time period, the electronic device is not located in the space in which the first electromagnetic interference signal exists; displaying the second interface in response to an operation of the user after the fifth time period; and displaying, by the electronic device, the second group of image frames in the second interface within a sixth time period, where a refresh rate of the first display within the sixth time period is the third refresh rate, where during the sixth time period, the electronic device is not located in the space in which the first electromagnetic interference signal exists.

When the electronic device determines that the first condition is satisfied, the electronic device disables the PSR function. In the foregoing embodiment, after the PSR function is disabled, even if it is detected that the first condition is no longer satisfied in a current scenario, a disabled state of the PSR function continues to be maintained. In this way, it can be avoided that the PSR function is mistakenly enabled when data transmission between the GPU and the display has not been restored to normal.

In the invention, the method further includes: displaying the first interface in response to an operation of the user after the fourth time period; displaying, by the electronic device, the first group of image frames in the first interface within a seventh time period, where a refresh rate of the first display within the seventh time period is the first refresh rate, where during the seventh time period, the electronic device is not located in the space in which the first electromagnetic interference signal exists; displaying the second interface in response to an operation of the user after the seventh time period; and displaying, by the electronic device, the second group of image frames in the second interface within an eighth time period, where a refresh rate of the first display within the eighth time period is the second refresh rate, where during the eighth time period, the electronic device is not located in the space in which the first electromagnetic interference signal exists.

In the foregoing embodiment, after recognizing that the first condition is no longer satisfied in a current scenario, the electronic device may enable the PSR function in a timely manner, thereby effectively reducing energy consumption of the electronic device without occurrence of a black screen flicker.

In some embodiments, after the electronic device is located in the space in which the first electromagnetic interference signal exists, the method further includes: generating, by the electronic device, an integrity check CRC exception if data transmitted between a GPU of the electronic device and the first display has a data loss; and disabling, by the electronic device, the PSR function after the electronic device generates the CRC exception.

For example, the electronic device may disable the PSR function based on that the electronic device generates the CRC exception.

In the foregoing embodiment, the electronic device may disable the PSR function in a timely manner, to avoid that the CRC exception triggers a self-check procedure of the PSR function, thereby avoiding a problem of a black screen flicker of the electronic device.

In some embodiments, after the electronic device generates the CRC exception, the method further includes: displaying a third interface in response to a first operation of the user, where the third interface includes a target option, the target option indicates to enable the PSR function, and the target option is non-selectable.

It may be understood that most users have little understanding of the PSR function, and it is difficult to master an occasion of enabling/disabling the PSR function. In this case, the PSR function may be mistakenly enabled. In the foregoing embodiment, a priority of autonomously enabling/disabling the PSR function by the electronic device is increased, to improve a problem that the user mistakenly enables the PSR function.

In some other embodiments, the third interface may be displayed in response to the first operation of the user, and the target option is hidden in the third interface. In this way, it can be avoided that the user mistakenly enables the PSR function.

In some other embodiments, the third interface may be displayed in response to the first operation of the user, and the third interface includes the target option, but the electronic device does not respond to an operation of the user on the target option. In this way, it can also be avoided that the user mistakenly enables the PSR function.

In some embodiments, after the electronic device generates the CRC exception and disables the PSR function, the method further includes:
enabling, by the electronic device, the PSR function after N consecutive first image frames pass CRC, where the first image frame is display data sent by the GPU in the electronic device to the first display, and N is a positive integer greater than 0.

For example, the electronic device may enable the PSR function based on the foregoing event (for example, the N consecutive first image frames pass CRC).

In the foregoing embodiment, a problem that a black screen flicker is triggered again after the PSR function is enabled can be avoided.

In some embodiments, the electronic device further includes an embedded controller (EC) and a basic input output system (BIOS), a first list is configured in the electronic device, the first list includes first model information and a first identifier, the first model information is model information of a display adapted to the electronic device, and the first identifier indicates the display corresponding to the first model information to enable the PSR function; and before the displaying a first interface in response to an operation of a user, the method further includes: obtaining, by the EC, first information from the first display after the electronic device is powered on, where the first information is model information prestored in the first display; setting, by the EC, a value of a first flag bit to a first value when the first information matches the first model information in the first list; and creating, by the BIOS, a first display driver based on a first parameter when the first flag bit is the first value, where the first display driver is configured to control the first display to use a variable refresh rate.

In the foregoing embodiment, the electronic device may automatically enable the PSR function based on that the first display supports the PSR function. Energy consumption is reduced while satisfying a display requirement.

In some embodiments, the disabling, by the electronic device, the PSR function after the electronic device generates the CRC exception includes: changing, by the EC, the first identifier in the first list to a second identifier, where the second identifier indicates the display corresponding to the first model information to disable the PSR function; setting, by the EC, the first flag bit to a second value; and creating, by the BIOS, a second display driver based on a second parameter when the first flag bit is set to the second value, where the second display driver is configured to indicate the first display to use a fixed refresh rate. In the foregoing embodiment, the electronic device may disable the PSR function in a timely manner based on the CRC exception generated by the electronic device, thereby avoiding a problem of a black screen flicker.

In some embodiments, after the electronic device generates the CRC exception and disables the PSR function, the method further includes: restoring the second identifier in the first list to the first identifier after N consecutive first image frames pass CRC; setting, by the EC, the first flag bit to the first value; and creating, by the BIOS, the first display driver based on the first parameter when the first flag bit is set to the first value, where the first display driver is configured to control the first display to use a variable refresh rate.

In the foregoing embodiment, the electronic device may enable the PSR function in a timely manner based on disappearance of the CRC exception, thereby reducing energy consumption of the device.

In some embodiments, after the obtaining first information from the first display, the method further includes: storing the first information in a first storage area; and after the electronic device is restarted, the method further includes: obtaining, by the EC, the first information from the first storage area when the first information fails to be obtained from the first display; setting, by the EC, the value of the first flag bit to the first value when the first information matches the first model information in the first list; and creating, by the BIOS, the first display driver based on the first parameter when the first flag bit is the first value, where the first display driver is configured to control the first display to use a variable refresh rate.

In the foregoing embodiment, a problem that the first information cannot be read from the first display occasionally is resolved, and fault tolerance of the foregoing method is improved.

In some embodiments, the electronic device is communicatively connected to a cloud server, and the method further includes: when a second list is obtained from the cloud server, determining, by the EC in the second list, the first model information that matches the electronic device, second model information, the first identifier, and a third identifier, where the second model information is model information of another display adapted to the electronic device, and the third identifier indicates the display corresponding to the second model information whether to enable the PSR function; and generating, by the EC, a new first list based on the first model information, the second model information, the first identifier, and the third identifier in the second list.

In some embodiments, before the generating a new first list, the method further includes: after the first display of the electronic device is changed to a second display, determining, by the EC, that second information obtained from the second display is different from the first information stored in a first storage area, where the second information is model information prestored in the second display.

In the foregoing embodiment, an unnecessary energy consumption loss caused by frequently updating the first list can be avoided.

In some embodiments, after the first display of the electronic device is changed to the second display, the method further includes: displaying the first interface in response to an operation of the user; displaying, by the electronic device, the first group of image frames in the first interface within a ninth time period, where a refresh rate of the second display within the ninth time period is a fourth refresh rate; displaying the second interface in response to an operation of the user after the ninth time period; and displaying, by the electronic device, the second group of image frames in the second interface within a tenth time period, where a refresh rate of the second display within the tenth time period is the fourth refresh rate, and the second display does not support the PSR function.

In the foregoing embodiment, the electronic device updates displays of different models, for example, changes a display that does not support the PSR function, and the electronic device may disable the PSR function in a timely manner, thereby avoiding an additional energy consumption loss. That is, the electronic device may automatically enable or disable the PSR function based on a model of a display, to implement compatibility of the foregoing method for a plurality of types of displays.

According to a second aspect according to the invention, an embodiment of this application provides an electronic device. The electronic device includes one or more processors and a memory. The memory is coupled to the processor, the memory is configured to store computer program code, the computer program code includes computer instructions, and when the one or more processors execute the computer instructions, the one or more processors are configured to perform the method in the first aspect and the possible embodiments of the first aspect.

According to a third aspect according to the invention, an embodiment of this application provides a computer storage medium, including computer instructions. When the computer instructions are run on an electronic device, the electronic device is enabled to perform the method in the first aspect and the possible embodiments of the first aspect.

According to a fourth aspect not claimed, this application provides a computer program product. When the computer program product runs on the foregoing electronic device, the electronic device is enabled to perform the method in the first aspect and the possible embodiments of the first aspect.

It may be understood that the electronic device, the computer storage medium, and the computer program product provided in the foregoing aspects are all applied to the corresponding method provided above. Therefore, for beneficial effects that can be achieved by the electronic device, the computer storage medium, and the computer program product, refer to the beneficial effects in the corresponding method provided above. Details are not described herein again.

### BRIEF DESCRIPTION OF DRAWINGS

FIG. 1 is a diagram of a hardware structure of an electronic device according to an embodiment of this application;
FIG. 2 is a diagram of a principle of a panel self refresh technology;
FIG. 3 is an example diagram of a display interface of an electronic device according to an embodiment of this application;
FIG. 4 is an example diagram of a software and hardware structure of an electronic device according to an embodiment of this application;
FIG. 5 is a diagram 1 of signaling interaction of a display control method according to an embodiment of this application;
FIG. 6 is a diagram 2 of signaling interaction of a display control method according to an embodiment of this application;
FIG. 7 is a diagram 3 of signaling interaction of a display control method according to an embodiment of this application;
FIG. 8 is an example diagram 1 of a scenario of a display control method according to an embodiment of this application;
FIG. 9 is an example diagram 2 of a scenario of a display control method according to an embodiment of this application;
FIG. 10 is an example diagram 3 of a scenario of a display control method according to an embodiment of this application;
FIG. 11 is an example diagram 4 of a scenario of a display control method according to an embodiment of this application;
FIG. 12 is an example diagram 5 of a scenario of a display control method according to an embodiment of this application;
FIG. 13 is an example diagram 6 of a scenario of a display control method according to an embodiment of this application;
FIG. 14 is a diagram 4 of signaling interaction of a display control method according to an embodiment of this application; and
FIG. 15 is an example diagram of a chip system according to an embodiment of this application.

### DESCRIPTION OF EMBODIMENTS

The following describes technical solutions in embodiments of this application with reference to the accompanying drawings in embodiments of this application. In the descriptions of this application, unless otherwise specified, "at least one" means one or more, and "a plurality of" means two or more. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

Embodiments of this application provide a display control method, and the display control method may be applied to an electronic device.

For example, the electronic device in embodiments of this application may be a device that has a display, for example, a portable computer (such as a mobile phone), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or a media player. A specific form of the electronic device is not specially limited in embodiments of this application. In subsequent embodiments, specific implementation details are described mainly by using an example in which the electronic device is a notebook computer.

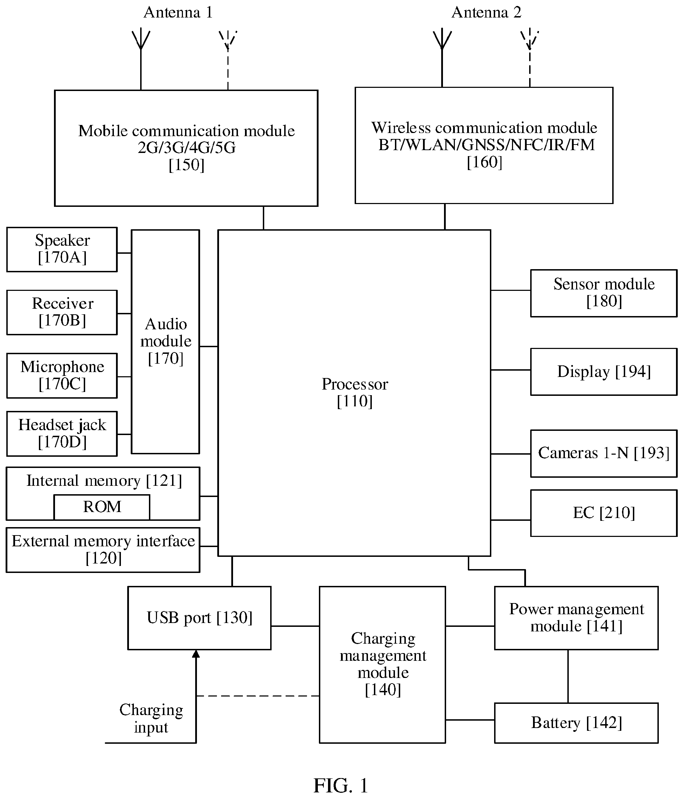

Refer to FIG. 1. FIG. 1 is a diagram of a possible hardware structure of an electronic device.

As shown in FIG. 1, the electronic device may include a processor 110, an external memory interface 120, an internal memory 121, a universal serial bus (universal serial bus, USB) port 130, an antenna 1, an antenna 2, a mobile communication module 150, a wireless communication module 160, an audio module 170, a speaker 170A, a microphone 170C, a headset jack 170D, a sensor module 180, and the like.

It may be understood that the structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include a central processing unit, an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components or may be integrated in one or more chips, for example, integrated in a main chip.

In some embodiments, the main chip may further include an embedded controller (EC) 210. The EC 210 is an embedded main control chip mounted onto a CPU bus, and is configured to manage various types of hardware of the electronic device, such as a display, a keyboard, and a touchscreen. The EC 210 may be always powered on, and is configured to control a clock and monitor running statuses of various types of hardware. For example, in embodiments of this application, the EC 210 may monitor a data transmission status between the display and the GPU. To be specific, the EC 210 may periodically detect whether a CRC error occurs between the display and the GPU. In addition, the EC 210 may further obtain device information of the display. In addition, the EC 210 may further determine, based on the device information of the display and a data transmission status between the display and the GPU, whether a PSR function can be enabled. Certainly, for specific implementation details, refer to descriptions in subsequent embodiments.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a solution for wireless communication that is applied to the electronic device and that includes a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 may be a display supporting a PSR technology, or may be a display not supporting a PSR technology. This is not specifically limited in embodiments of this application.

In addition, the display 194 includes a display panel, that is, the panel mentioned in the foregoing embodiment. In addition, the display 194 may further include a TCON. If the display 194 supports the PSR function, a buffer storage area is set in a corresponding TCON. If the display 194 does not support the PSR function, no buffer storage area is set in a corresponding TCON. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

The electronic device may implement a photographing function by using the ISP, a camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device may include one or N cameras 193. N is a positive integer greater than 1.

The digital signal processor is configured to process a digital signal. In addition to processing a digital image signal, the digital signal processor may further process another digital signal. For example, when the electronic device selects a frequency, the digital signal processor is configured to perform Fourier transform or the like on frequency energy.

The video codec is configured to compress or decompress a digital video. The electronic device can support one or more video codecs. In this way, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

Certainly, the electronic device may further include a charging management module 140, a power management module 141, a battery 142, an indicator, a keyboard, a mouse, a control panel, a heat dissipation apparatus, one or more SIM card interfaces, and the like. This is not limited in embodiments of this application.

In some embodiments, the main chip of the electronic device supports enabling of a panel self refresh (panel self refresh, PSR) function, and the display of the electronic device may be a display supporting the PSR function, or may be a display not supporting the PSR function.

It may be understood that the foregoing panel self refresh (panel self refresh, PSR) is a technology that can effectively reduce power consumption of an electronic device. It may be understood that the electronic device includes a GPU and a display. The display needs to maintain graphic display depending on continuous processing of display data by the GPU.

In an actual running process of the electronic device, for a scenario with a relatively high screen refresh requirement, for example, a scenario of running a large-scale game, the GPU needs to continuously process display data, and the display needs to quickly refresh display content on a display panel, to satisfy a display requirement in the current scenario.

For a scenario with a low screen refresh requirement, for example, a scenario such as displaying an e-book or browsing a static web page, even if the GPU does not frequently process display data, and the display does not quickly refresh display content on the panel, a display requirement in the current scenario can be satisfied. In this scenario, the electronic device may reduce power consumption of the electronic device by using a PSR technology.

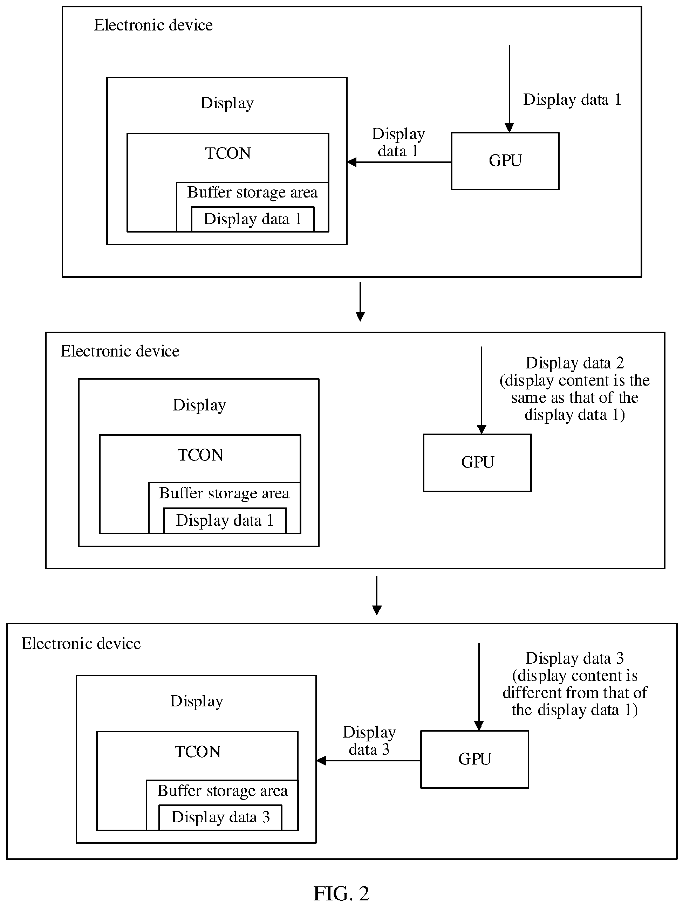

A principle of reducing power consumption according to the PSR technology is as follows: As shown in FIG. 2, a buffer storage area is set in a timing controller (timing controller, TCON) of the panel of the display. After completing processing a frame of display data (for example, referred to as display data 1) each time, the GPU may send the display data 1 to the display, and the display may refresh display content on the display panel based on the display data 1, that is, the display displays the display data 1. Certainly, in addition to displaying the display data 1, the display may further store the display data 1 in the buffer storage area. Then, if picture content of a next frame of display data (for example, display data 2) is the same as picture content of display data stored in the buffer storage area, the GPU may not process the display data 2. In this case, the display may continue to refresh display content on the panel based on the display data 1 in the buffer storage area. That is, during display of a static interface, the GPU may pause display data processing. In this way, operation pressure of the GPU can be relieved, and power consumption can be reduced.

Certainly, if picture content of a next frame of display data (for example, display data 3) is different from the picture content of the display data stored in the buffer storage area, the GPU continues to process the display data 3, and sends the display data 3 to the display. Similarly, in addition to displaying the display data 3, the display may further store the display data 3 in the buffer storage area to replace the display data 1.

That is, during display of a static interface, the GPU may stop processing display data, and may stop sending display data to the display. During display of a dynamic interface, the GPU may continue to normally process display data. In this way, normal display of the display can be ensured.

In addition, after the PSR technology is used, the electronic device can dynamically adjust a refresh rate of the display panel of the display while ensuring that the display can work normally. For example, in a scenario of displaying a still picture, a data transmission frequency between the GPU and the display is relatively low, and a CPU may indicate the display to use a relatively high screen refresh rate. For another example, in a scenario of displaying a dynamic picture, data transmission between the GPU and the display is frequent, and the CPU may indicate the display to use a relatively low screen refresh rate. That is, in a display scenario in which a picture is usually still, the PSR technology not only can reduce an operation amount of the GPU, but also can reduce a quantity of refresh times of the display, thereby effectively reducing energy consumption.

In some embodiments, the electronic device may enable the PSR function or disable the PSR function in response to an operation of a user.

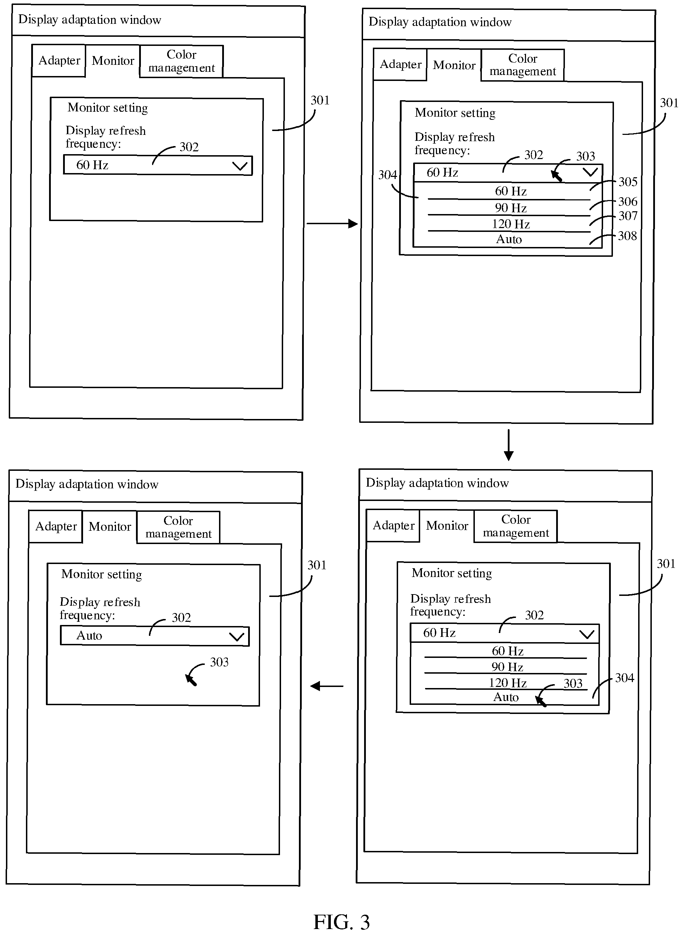

For example, during a period of displaying a monitor configuration interface, the electronic device may enable the PSR function or disable the PSR function in response to an operation of a user. The monitor configuration interface may be a tab interface in a display adaptation window. As shown in FIG. 3, the monitor configuration interface 301 includes a display refresh configuration bar 302, and a current refresh status may be displayed in the display refresh configuration bar 302. For example, the display of the electronic device fixedly uses a refresh rate of 60 Hz, that is, the PSR function has been disabled, and the display refresh configuration bar 302 displays "60 Hz". For another example, the display fixedly uses a refresh rate of 90 Hz currently, that is, the PSR function has been disabled, and the display refresh configuration bar 302 displays "90 Hz". For another example, the display of the electronic device fixedly uses a refresh rate of 120 Hz, that is, the PSR function has been disabled, and the display refresh configuration bar 302 displays "120 Hz". For another example, a refresh rate of the display of the electronic device may be dynamically adjusted among 60 Hz, 90 Hz, and 120 Hz, that is, the PSR function is enabled, and the display refresh configuration bar 302 displays "Auto".

In an implementation, a process in which the electronic device may enable the PSR function or disable the PSR function in response to the operation of the user during the period of displaying the monitor configuration interface may include the following.

In response to an operation of the user for indicating to switch a refresh status, the electronic device displays a refresh rate selection window in the monitor configuration interface. For example, the operation for indicating to switch a refresh status may be an operation that the user moves a mouse and clicks a left mouse button after moving a cursor corresponding to the mouse to the display refresh configuration bar 302. That is, as shown in FIG. 3, after the cursor 303 corresponding to the mouse is displayed in the display refresh configuration bar 302, the electronic device detects a level signal change of the left mouse button, and may display the refresh rate selection window 304 relative to the display refresh configuration bar 302. The refresh rate selection window 304 includes a plurality of options indicating different refresh rates, for example, an option 305 identified as "60 Hz", an option 306 identified as "90 Hz", and an option 307 identified as "120 Hz". The refresh rate selection window 304 may further include an option indicating the PSR function, for example, an option 308 identified as "Auto".

In some examples, in response to an operation of the user for selecting the option indicating the PSR function, the electronic device may enable the PSR function. For example, the operation that the user selects the option indicating the PSR function may be an operation that the user moves the mouse and clicks the left mouse button after moving the cursor 303 corresponding to the mouse to the option indicating the PSR function. That is, as shown in FIG. 3, after the refresh rate selection window 304 is displayed, and the cursor 303 is displayed at the option 308 identified as "Auto", the electronic device detects a level signal change of the left mouse button, and may determine to enable the PSR function. After the PSR function is enabled, the display refresh configuration bar 302 displays "Auto".

In some other examples, in response to an operation that the user selects an option indicating a refresh rate, the electronic device may disable the PSR function, and use a frequency corresponding to the option as a refresh rate fixedly used by the display. For example, when the refresh rate selection window 304 is displayed, and the cursor 303 is displayed at the option 306 identified as "90 Hz", the electronic device detects a level signal change of the left mouse button, and may determine to disable the PSR function, and use 90 Hz as a refresh rate fixedly used by the display.

In some cases, displays in some batches do not support creation of a buffer storage area in a TCON, and after the PSR function is enabled on electronic devices configured with the displays in the batches, not only energy consumption cannot be reduced, but also unnecessary performance overheads are additionally increased.

In some other cases, in a process of data transmission between the GPU and the display, data transmission fails probabilistically, for example, an integrity check (cyclic redundancy check, CRC) error occurs. In subsequent embodiments, occurrence of a CRC error represents a scenario in which a data transmission failure occurs in a data transmission process.

When the electronic device enables the PSR function, data transmission that occurs in a data transmission process triggers the display to perform self-check and repair. In this process, a display driver indicates the display to be powered on again after being powered off. Consequently, a black screen problem occurs (duration of a black screen is approximately 1.2S, and the user visually senses that a black screen flicker occurs).

To improve the foregoing problem, embodiments of this application provide a display control method, which may be applied to an electronic device. A main chip of the electronic device supports enabling of a PSR function, and a display may be a display supporting the PSR function, or may be a display not supporting the PSR function.

For the display not supporting the PSR function, the electronic device may be configured to disable the PSR function, to reduce energy consumption. For the display supporting the PSR function, the electronic device may be configured to enable or disable the PSR function based on a data transmission status between a GPU and the display. For example, when data transmission fails between the GPU and the display, the electronic device may be configured to disable the PSR function, to avoid a black screen problem. When data transmission does not fail, the electronic device may be configured to enable the PSR function, to save energy and increase endurance time of the electronic device.

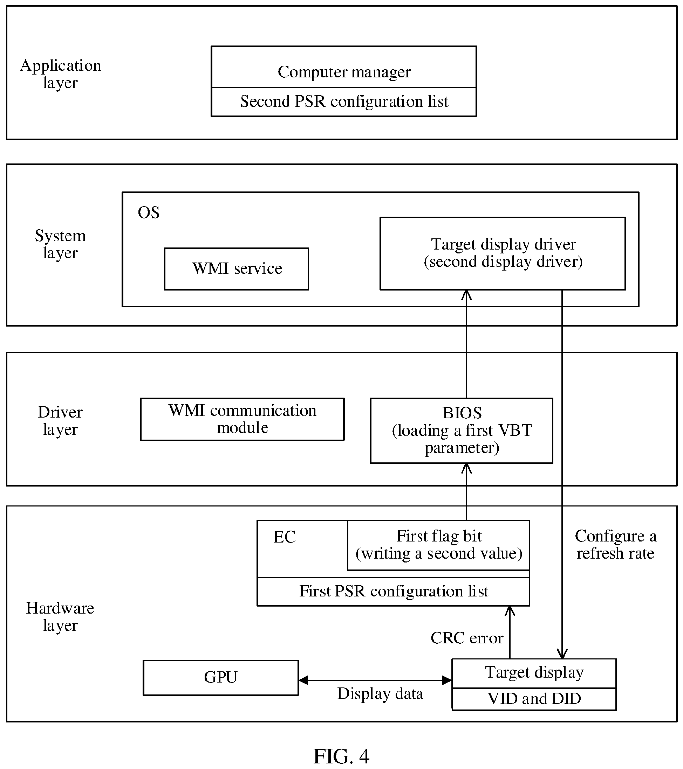

A software and hardware structure of a notebook computer provided in an embodiment of this application is described below with reference to FIG. 4 by using an example in which the electronic device is the notebook computer.

As shown in FIG. 4, the notebook computer may include an application layer, a system layer, a driver layer, and a hardware layer.

For example, the application layer may include a series of application programs such as a computer manager. For convenience of description, the application program is briefly referred to as an application below.

The foregoing computer manager may indicate to update a first PSR configuration list in the notebook computer.

It may be understood that the first PSR configuration list may be used to decide whether to enable a PSR function of the notebook computer. The first PSR configuration list may be configured in storage space of the EC 210. The first PSR configuration list includes a model of a configurable display of the notebook computer and a PSR configuration item corresponding to each type of display.

For example, the first PSR configuration list indicates that the model of the configurable display of the notebook computer includes a display A and a display B. A PSR configuration item corresponding to the display A is "disable", and a PSR configuration item corresponding to the display B is "enable". In this way, after the notebook computer is configured with the foregoing first PSR configuration list, if a target display of the notebook computer is the display A, the PSR function may be disabled, or if a target display of the notebook computer is the display B, the PSR function may be enabled. The target display is an actually integrated display in the notebook computer.

Certainly, the first PSR configuration list may be updated. For example, a new display model is added to the first PSR configuration list. For another example, a PSR configuration item in the first PSR configuration list may be updated from "enable" to "disable", or a PSR configuration item in the first PSR configuration list may be updated from "disable" to "enable".

In an implementation, the computer manager may communicate with a cloud server, and the cloud server may store a second PSR configuration list. The second PSR configuration list includes a plurality of electronic devices (which may include the notebook computer). In addition, the second PSR configuration list further records a model of a configurable display of each electronic device and a PSR configuration item corresponding to each type of display. If a display supports the PSR function, in the second PSR configuration list, such a type of display corresponds to enabling the PSR function. If a display does not support the PSR function, in the second PSR configuration list, such a type of display corresponds to disabling the PSR function.

After the computer manager obtains the second PSR configuration list from the cloud server by using an over-the-air technology (Over-the-Air Technology, OTA), the computer manager may update the first PSR configuration list based on the second PSR configuration list. For example, the second PSR configuration list indicates that in addition to the display A and the display B, an adaptive display C is newly added to the notebook computer of such a version, and the display C supports the PSR function. The display C and a corresponding PSR configuration item are updated to the first PSR configuration list. For another example, a PSR configuration item of the display A in the second PSR configuration list is "enable", and the PSR configuration item corresponding to the display A in the first PSR configuration list may be updated from "disable" to "enable".

Certainly, in addition to the computer manager, the application layer may further include another application. The another application may be an application program installed in the notebook computer when an operating system is installed, or may be a third-party application (for example, an application downloaded and installed by the user through an application store). This is not limited in embodiments of this application.

For another example, the system layer may include an operating system of the notebook computer. In embodiments of this application, the operating system may be a Windows OS (for example, a personal computer), or may be an Android OS (for example, a tablet computer). This is not specifically limited in embodiments of this application. In subsequent embodiments, an example in which the operating system is a Windows OS is used for description.

As shown in FIG. 4, the Windows OS of the notebook computer includes a WMI service and a target display driver.

The WMI service is configured to receive data delivered by the application layer. For example, after the computer manager obtains the second PSR configuration list, the WMI service may receive a WMI instruction from the computer manager. The WMI instruction instructs to update the first PSR configuration list in the notebook computer based on the second PSR configuration list. In addition, the WMI service is further configured to transfer the data to corresponding hardware through the driver layer. For example, after the WMI instruction from the computer manager is received, the WMI instruction is then delivered to the EC through the driver layer, to trigger the EC to update the first PSR configuration list.

The target display driver is a display driver created by a basic input output system (basic input output system, BIOS) in the driver layer after a graphics card firmware list (video bios table, VBT) parameter is loaded.

For example, after the BIOS loads the VBT parameter, parameters of the display driver may be configured based on the VBT parameter, to obtain the corresponding target display driver. After the target display driver is obtained, a refresh rate of the target display is configured by the target display driver based on the loaded VBT parameter. It may be understood that the VBT parameter is a binary data block, and records a plurality of display-related parameters, such as detail timing, GPIO Pins, and Clock.

In some embodiments, a plurality of groups of VBT parameters may be configured in the notebook computer, and the VBT parameters may indicate a refresh manner that needs to be used for the target display. For example, the plurality of groups of VBT parameters include a VBT parameter 1, a VBT parameter 2, a VBT parameter 3, and a VBT parameter 4. Parameter types of the four groups of VBT parameters are the same, but parameter values may be different. The VBT parameter 1 may indicate that the target display is fixedly refreshed at 60 Hz, the VBT parameter 2 may indicate that the target display is fixedly refreshed at 90 Hz, the VBT parameter 3 may indicate that the target display is fixedly refreshed at 120 Hz, and the VBT parameter 4 may indicate that a refresh rate of a display is dynamically adjusted according to a rule of the PSR function.

That is, when the VBT parameter 4 is loaded, and the target display supports the PSR function, the target display driver may drive the target display, to dynamically adjust a refresh rate of the target display according to the rule of the PSR function. In subsequent embodiments, the target display driver indicating to enable the PSR function may be referred to as a first display driver.

When another VBT parameter (for example, the VBT parameter 1, the VBT parameter 2, or the VBT parameter 3) is loaded, the target display driver may drive the target display to run at a fixed refresh rate, that is, the PSR function is disabled. In subsequent embodiments, the target display driver indicating to disable the PSR function may be referred to as a second display driver.

For another example, the driver layer includes a WMI communication module and a BIOS.

The WMI communication module is configured to receive data from the WMI service and transfer the data to the EC. For example, a WMI instruction from the WMI service is received and transferred to the EC, to trigger the EC to update the first PSR configuration list.

The BIOS is a set of programs solidified on a ROM chip, and stores a basic input output program, system setting information, a program for self-check after power-on, and a program for self-starting a system. A main function of the BIOS is to provide the notebook computer with the lowest-level and most direct hardware setting and control.

In some embodiments, the BIOS may load the VBT parameter, and the loaded VBT parameter may also be referred to as a used VBT parameter. For example, when the VBT parameter 4 is loaded, a corresponding target display driver (for example, the first display driver) is created based on the VBT parameter 4. In this scenario, the first display driver may drive the target display, to dynamically adjust the refresh rate of the display according to the rule of the PSR function.

For another example, the hardware layer includes the EC, a GPU, and the target display. A first flag bit is set in the EC, and the first flag bit may be an enable switch of the PSR function. In terms of hardware, the first flag bit may be a register in the EC, which may also be referred to as a first register. Different values may be configured for the first flag bit. When the first flag bit corresponds to different values, the EC may indicate the BIOS to load different VBT parameters. In this way, when different VBT parameters are loaded, different target display drivers may be created. When the target display is controlled by using different target display drives, enabling of the PSR function and disabling of the PSR function can be implemented.

In some embodiments, the EC may alternatively configure a value of the first flag bit based on an actual situation (for example, whether a CRC error occurs, or whether the target display supports the PSR function), to automatically enable or disable the PSR function.

For example, the EC of the notebook computer may recognize a display model of the target display. In an implementation, a DDC memory of the target display includes extended display identification data (Extended display identification data, EDID). The EDID is extended display identification data. The EDID may include parameters indicating a vendor and an attribute of the display, for example, a vender identity document (vender Identity document, VID) of the display and a device identity document (device Identity document, DID) of the display. In this way, the EC may read the EDID through a DDC channel in the target display, to determine the VID and the DID of the target display. Then, the EC may determine the model of the target display based on the read VID and DID.

Then, the EC determines, based on the first PSR configuration list and the model of the target display, whether the target display supports enabling of the PSR function. When the target display does not support enabling of the PSR function, the EC may indicate the BIOS to load a VBT parameter that cannot enable the PSR function, for example, a first VBT parameter. In this way, after the first VBT parameter is completely loaded, the PSR function is disabled, and the target display uses a fixed refresh rate. When the target display supports the PSR function, the EC may indicate the BIOS to load a VBT parameter that can enable the PSR function, for example, a second VBT parameter. In this way, after the second VBT parameter is completely loaded, the PSR function is enabled, and the target display uses a dynamically changed refresh rate.

In an implementation, the EC may query the first PSR configuration list for a PSR configuration item corresponding to the target display. When a found PSR configuration item indicates to enable the PSR function, the EC may set the first flag bit to a first value, to indicate the BIOS to load a VBT parameter (for example, the second VBT parameter) that can implement the PSR function, and create the first display driver that indicates to enable the PSR function. When a found PSR configuration item indicates to disable the PSR function, the EC may set the first flag bit to a second value, to indicate the BIOS to load a VBT parameter (for example, the first VBT parameter) that cannot implement the PSR function, and create the second display driver that indicates to disable the PSR function.

For another example, as shown in FIG. 4, if a CRC error occurs in data transmitted between the GPU and the target display, the EC may set the value of the first flag bit to the second value, and notify the BIOS. When determining that the first flag bit is the second value, the BIOS may uninstall the original target display driver, and then load a VBT parameter that can disable the PSR function, for example, load the first VBT parameter. After the first VBT parameter is completely loaded, the second display driver that indicates to disable the PSR function may be created. The second display driver indicates, based on the first VBT parameter, the target display to use a fixed refresh rate.

In addition, after the EC of the notebook computer triggers to enable the PSR function based on an actual situation, "Auto" is displayed on the display refresh configuration bar 302 in the monitor configuration interface 301 of the notebook computer. After the notebook computer disables the PSR function based on an actual situation, a default refresh rate is displayed on the display refresh configuration bar 302 in the monitor configuration interface 301. The default refresh rate may be a preset refresh rate from a plurality of fixed refresh rates (for example, 60 Hz, 90 Hz, and 120 Hz) that can be used. For example, the default refresh rate is configured to be 90 Hz.

In some examples, displays of different models may use different fixed refresh rates, and may correspond to different default refresh rates. For example, displays of some versions can only fixedly use 60 Hz and 90 Hz, and a corresponding default refresh rate may be configured to be 60 Hz.

It should be noted herein that, a priority of automatically enabling/disabling the PSR function by the notebook computer is higher than a priority of enabling/disabling the PSR function in response to an indication of a user. That is, when "enabling or disabling the PSR function" indicated by the user conflicts with "enabling or disabling the PSR function" automatically determined by the notebook computer, "enabling or disabling the PSR function" automatically determined by the notebook computer is used as a basis. For example, after the user manually enables the PSR function, the notebook computer may disable the PSR function based on an actual situation. After the user manually disables the PSR function, the notebook computer may enable the PSR function based on an actual situation. In this way, it is avoided that actual use experience is affected when the user does not know the PSR function and mistakenly enable or disable the PSR function. For another example, after the notebook computer disables the PSR function based on an actual situation, the notebook computer may not respond to an operation of the user for indicating to enable the PSR function.

In some other embodiments, as shown in FIG. 4, the first PSR configuration list is stored in a storage area built in the EC. After receiving a WMI instruction from the WMI communication module, the EC may update the first PSR configuration list based on the second PSR configuration list.

The second PSR configuration list may be a PSR configuration list obtained by the computer manager from the cloud server. For example, the second PSR configuration list may be shown as Table 1 below.

**Table 1**

| Notebook computer model | Configurable display | PSR function |
|---|---|---|
| A | Model information of a display A | Disable |
| | Model information of a display B | Enable |
| B | Model information of a display D | Enable |
| | Model information of a display E | Enable |

It can be learned that, as shown in Table 1, a notebook computer of the model A can support configuration of the display A and the display B. In other words, a notebook computer of the model A may be configured with the display A, or may be configured with the display B. Alternatively, the notebook computer may be configured with both the display A and the display B (that is, configured with two displays) through external connection or in another manner. In addition, as shown in Table 1, a notebook computer configured with the display A does not support enabling the PSR function for the display A. That is, in Table 1, a PSR configuration item (that is, the PSR function) corresponding to the display A is "disable". A notebook computer configured with the display B supports enabling the PSR function for the display B. That is, in Table 1, a PSR configuration item (that is, the PSR function) corresponding to the display B is "enable".

As shown in Table 1, a notebook computer of the model B can support configuration of the display D and the display E. In other words, a notebook computer of the model B may be configured with the display D, or may be configured with the display E. Alternatively, the notebook computer may be configured with both the display D and the display E (that is, configured with two displays) through external connection or in another manner. In addition, as shown in Table 1, a notebook computer configured with the display D and/or the display E supports enabling of the PSR function. That is, in Table 1, PSR configuration items corresponding to the display D and the display E are "enable".

In some embodiments, after obtaining the second PSR configuration list, the notebook computer may determine the first PSR configuration list based on the second PSR configuration list. Using a notebook computer of the model A as an example, after the notebook computer of the model A obtains the second PSR configuration list, a display model related to the model A and a PSR configuration item corresponding to the related display model may be determined in the second PSR configuration list. For example, when the second PSR configuration list is shown as Table 1, the first PSR configuration list determined by the notebook computer of the model A is shown as Table 2 below.

**Table 2**

| Configurable display | PSR function |
|---|---|
| Model information of a display A | Disable |
| Model information of a display B | Enable |

As shown in Table 2, a PSR configuration item corresponding to the model information of the display A is "disable", and a PSR configuration item corresponding to the model information of the display B is "enable".

In this way, after the notebook computer of the model A is powered on, the notebook computer may determine a model of an actually configured display. Then, the PSR function is enabled or disabled based on the model of the display with reference to the first PSR configuration list.

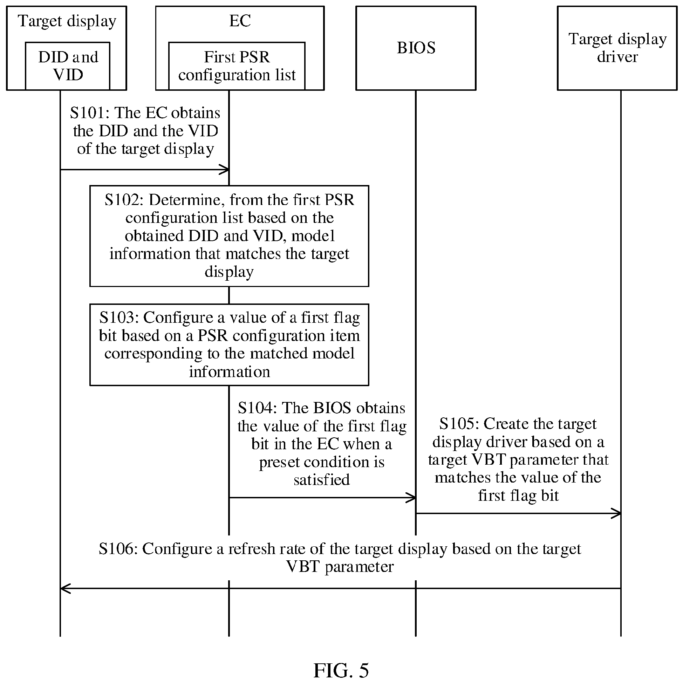

As shown in FIG. 5, according to the foregoing Table 2, implementation details of enabling or disabling the PSR function are as follows:
S101: An EC obtains a DID and a VID of a target display.

In some embodiments, after a notebook computer is powered on, the EC may read EDID in a display through a DDC channel, and obtain a DID and a VID corresponding to the display from the EDID. It may be understood that the EC may manage most hardware in the notebook computer. In this way, the EC may communicate with an actually configured display in the notebook computer and obtain data stored in the display. After the DID and the VID are obtained, the DID and the VID may be stored in a first storage area in the EC, to facilitate subsequent reading and use.

In another embodiment, after the notebook computer completes updating a first PSR configuration list by using a second PSR configuration list, the DID and the VID may also be triggered. Certainly, in this scenario, the DID and the VID may be directly obtained from the target display, or the DID and the VID may be obtained from the first storage area. In addition, for a process in which the first PSR configuration list is completely updated by using the second PSR configuration list, refer to descriptions in subsequent embodiments. Details are not described herein.

S102: The EC determines model information matching the target display from the first PSR configuration list based on the obtained DID and VID.

The VID may indicate a vendor of the display, for example, may be a character sequence. The DID is a unique device identifier of the display. In this way, the EC may determine the model information matching the target display from the first PSR configuration list based on the VID and the DID.

It may be understood that model information of a display in the first PSR configuration list may include: information indicating a vendor and version information of a device.

When the information indicating the vendor matches the VID (for example, a character sequence indicating the vendor is the same as the VID), and the version information of the device also matches the DID (for example, a version sequence indicating a version is the same as some fields of the DID), it is determined that the model information matches the target display. In addition, in the first PSR configuration list, the model information matching the target display may also be referred to as matched model information.

In some embodiments, the EC determines the matched model information corresponding to the target display from the first PSR configuration list based on the obtained DID and VID.

S103: Configure a value of a first flag bit based on a PSR configuration item corresponding to the matched model information.

The first flag bit may be stored in a register of the EC, and the first flag bit may also be referred to as a target flag bit.

In some embodiments, after determining the matched model information, the EC may continue to obtain the PSR configuration item corresponding to the matched model information, that is, a PSR configuration item corresponding to the target display, from the first PSR configuration list.

For example, when the target display in the notebook computer is a display A, the matched model information is model information of the display A, and it may be determined according to Table 2 that the corresponding PSR configuration item is "disable".

When the PSR configuration item corresponding to the matched model information is "disable", the EC may configure the value of the first flag bit to be a second value. For example, the EC may write the second value into a first register corresponding to the first flag bit. After the value of the first flag bit is configured to be the second value, it indicates that the PSR function needs to be disabled.

For another example, when the target display in the notebook computer is a display B, the matched model information is model information of the display B, and it may be determined according to Table 2 that the corresponding PSR configuration item is "enable".

When the PSR configuration item corresponding to the matched model information is "enable", the EC may configure the value of the first flag bit to be a first value. For example, the EC may write the first value into a first register corresponding to the first flag bit. After the value of the first flag bit is configured to be the first value, it indicates that the PSR function needs to be enabled. The second value is different from the first value. For example, the second value may be 0, and the first value may be 1.

In addition, a default value of the first flag bit is the first value. In this way, before the notebook computer is powered on for the first time and the PSR configuration item corresponding to matched model information is found, the value of the first flag bit may be the first value.

S104: A BIOS obtains the value of the first flag bit in the EC when a preset condition is satisfied.

For example, the preset condition may include at least one of the following: the notebook computer performs a power-on procedure, and the value of the first flag bit changes. Optionally, with reference to the preset condition, in the following scenario, the BIOS may be triggered to obtain the value of the first flag bit in the EC, for example, a scenario in which the notebook computer is powered on, for another example, a scenario in which a CRC error triggers a change in the value of the first flag bit, or for another example, a scenario in which the first PSR configuration list is updated based on the second PSR configuration list.

In some embodiments, during power-on of the notebook computer, a BIOS program in a ROM chip may be run. After the BIOS program is run, a BIOS process is created in the notebook computer, and the BIOS process may be referred to as a BIOS for short. In addition, during power-on, the BIOS initializes the target display, that is, loads a VBT parameter required for running of the target display. In this case, the BIOS may query the value of the first flag bit in the EC.

In some other embodiments, when the EC changes the value of the first flag bit from the first value to the second value, an interrupt may be reported to the BIOS. The interrupt may carry "the value of the first flag bit is the second value" or "the value of the first flag bit is the first value". In this way, the BIOS may determine the value of the first flag bit based on the interrupt reported by the EC.

S105: The BIOS creates a target display driver based on a target VBT parameter matching the value of the first flag bit.

In some embodiments, each configurable value of the first flag bit may correspond to a group of VBT parameters. For example, configurable values of the first flag bit include the first value and the second value, the first value may correspond to a second VBT parameter (for example, referred to as a first parameter), and the second value may correspond to a first VBT parameter (for example, referred to as a second parameter).

In this way, when determining that the value of the first flag bit is the second value, the BIOS may determine that the target VBT parameter is the first VBT parameter. In this scenario, the BIOS may load the first VBT parameter. Loading the first VBT parameter may include creating a target display driver configured with the first VBT parameter, that is, a second display driver. The second display driver may disable the PSR function. After the PSR function is disabled, the target display uses a fixed refresh rate, for example, uses a default refresh rate, or uses a fixed refresh rate directly specified by a user. For example, the first VBT parameter may be a general name of a plurality of groups of VBT parameters, and different groups of VBT parameters indicate that different fixed refresh rates may be used. That is, when the PSR function is disabled, the notebook computer may fixedly use a plurality of refresh rates.

When determining that the value of the first flag bit is the first value, the BIOS may determine that the target VBT parameter is the second VBT parameter. In this scenario, the BIOS may load the second VBT parameter. Loading the second VBT parameter may include creating a target display driver configured with the second VBT parameter, that is, a first display driver. The first display driver may enable the PSR function. After the PSR function is enabled, the target display uses a dynamically changed refresh rate.

S106: The target display driver configures a refresh rate of the target display based on the target VBT parameter.

When the loaded target VBT parameter is the first VBT parameter, the second display driver created by the BIOS may disable the PSR function based on the first VBT parameter, and indicate the target display to refresh display content on the target display at a fixed refresh rate.

That is, when the target display does not support the PSR function, the first VBT parameter is loaded, so that the notebook computer disables the PSR function, or the PSR function is kept in a disabled state, to avoid additional power consumption.

When the loaded target VBT parameter is the second VBT parameter, the first display driver created by the BIOS may enable the PSR function based on the second VBT parameter, and indicate the target display to refresh display content on the target display at a dynamically changed refresh rate.

That is, when the target display supports the PSR function, the second VBT parameter is loaded, so that the notebook computer enables the PSR function. After the PSR function is enabled, in a scenario of displaying a static interface, workload of the GPU is reduced, a data transmission frequency between the GPU and the target display is reduced, and the refresh rate of the target display is also reduced. In this way, energy consumption of the notebook computer is effectively reduced.

In another embodiment, when a plurality of target displays are configured on a same notebook computer, there may be a plurality of first flag bits in the EC, each first flag bit corresponds to one target display, and each target display corresponds to one exclusive target display driver.

In the foregoing embodiment, a value of each first flag bit may determine whether to enable the PSR function for the corresponding target display. That is, the BIOS loads matched VBT parameters (that is, target VBT parameters) for different target displays based on values of different first flag bits. Certainly, in an actual scenario, target VBT parameters of different target displays may be different, or certainly may be the same. This depends on a specific situation. In this way, the target display driver corresponding to each target display may control a refresh rate of the corresponding target display based on the corresponding target VBT parameter, so that a plurality of types of displays are compatible at the same time, thereby effectively reducing energy consumption.

In some other embodiments, when the PSR function of the notebook computer is enabled and run, a corresponding PSR configuration item of the target display in the first PSR configuration list is "enable". In this scenario, if data transmission between the GPU and the target display is abnormal, for example, the target display finds that display data from the GPU has a CRC error, the notebook computer may further disable the PSR function.

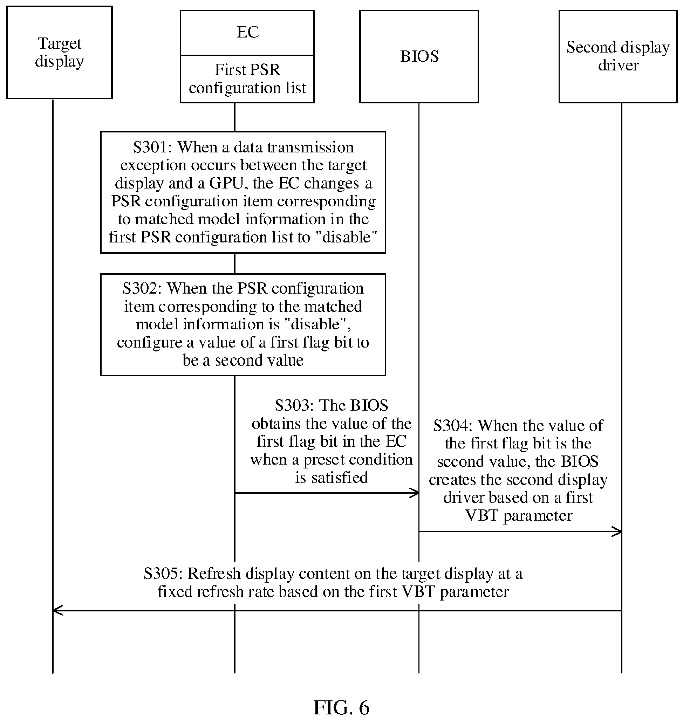

As shown in FIG. 6, the display control method may further include the following steps.

S301: The EC changes the PSR configuration item corresponding to the matched model information in the first PSR configuration list to "disable" when a data transmission exception occurs between the target display and the GPU.

Optionally, in a process of transferring display data between the target display and the GPU, the target display may perform data check, for example, perform CRC check, on display data from the GPU. When the target display finds a CRC error, the EC is notified. It may also be understood that the EC detects that a CRC error occurs between the target display and the GPU. In this way, the EC determines that the PSR function needs to be disabled.

The matched model information is model information matching the target display in the first PSR configuration list. That is, the matched model information is model information of a display included in the first PSR configuration list. In addition, a display model indicated by the matched model information is the same as the model of the target display.

It may be understood that when the PSR function is enabled, if a CRC error occurs, the target display may be triggered to perform self-check. In a self-check process, the target display automatically restarts (for example, the target display is powered on again after being powered off). In a process of restarting the target display, the target display becomes black for a short time and then becomes bright again. For the user, the target display has a problem of a black screen flicker visually.

In embodiments of this application, after the target display finds the CRC error, the PSR function is disabled. That is, the PSR configuration item corresponding to the matched model information in the first PSR configuration list may be changed to "disable".

In some embodiments, in the first PSR configuration list, if the PSR configuration item corresponding to the matched model information indicates "disable", the PSR configuration item may be kept in a "disable" state.

In some embodiments, CRC check is performed on each frame of display data received by the target display from the GPU. In addition, the EC may periodically determine whether the target display finds a CRC error. In some other embodiments, the target display may immediately report a CRC error to the EC after finding the CRC error. That is, a specific manner in which the EC detects the CRC error is not limited in embodiments of this application. When it is detected that the CRC error occurs, if the PSR configuration item of the matched model information in the first PSR configuration list is "enable", the PSR configuration item may be changed to "disable".

S302: The EC configures the value of the first flag bit to be the second value when the PSR configuration item corresponding to the matched model information is "disable".

In some embodiments, in a scenario in which the target display is the display B supporting the PSR function, in the first PSR configuration list, the PSR configuration item corresponding to the target display is "enable". In this way, as shown in S103 in FIG. 5, the EC may configure the value of the first flag bit to be the first value, for example, write the first value into the first register corresponding to the first flag bit, and indicate the BIOS to load the second VBT parameter, to enable the PSR function.

After data transmission between the GPU and the target display is abnormal, the EC may change the PSR configuration item corresponding to the matched model information in the first PSR configuration list (or may be referred to as a PSR configuration item corresponding to the target display in the first PSR configuration list) from "enable" to "disable". In this way, based on the PSR configuration item corresponding to the matched model information, the EC may configure the value of the first flag bit to be the second value, for example, write the second value into the first register corresponding to the first flag bit, to overwrite the original first value.

S303: The BIOS obtains the value of the first flag bit in the EC when a preset condition is satisfied.

In some embodiments, for implementation details of S303, refer to S104 in the foregoing embodiment, and details are not described herein again.

S304: When the value of the first flag bit is the second value, the BIOS creates the second display driver based on the first VBT parameter.

In some embodiments, before data transmission between the GPU and the target display is abnormal, the PSR function of the notebook computer is in an enabled state. That is, in this scenario, the first display driver in the notebook computer controls the target display. After data transmission between the GPU and the target display is abnormal, the BIOS loads the first VBT parameter to disable the PSR function. In a process of loading the first VBT parameter, the first display driver may be first uninstalled, and then the corresponding second display driver is created based on the first VBT parameter. For implementation details of S304, refer to S105 in the foregoing embodiment, and details are not described herein again.

S305: The second display driver refreshes display content on the target display at a fixed refresh rate based on the first VBT parameter.

In some embodiments, for implementation details of S305, refer to S106 in the foregoing embodiment, and details are not described herein again.

That is, in embodiments of this application, for the notebook computer on which the PSR function has been enabled, if it is detected that a data transmission exception occurs between the target display and the GPU, for example, the target display detects a CRC error, the PSR function may be disabled in a timely manner.

It may be understood that when the notebook computer enables the PSR function, if a CRC error occurs between the target display and the GPU, the target display is triggered to perform self-check. In a self-check process, the target display is powered off and powered on again. In addition, when the notebook computer disables the PSR function, even if the target display detects a CRC error, self-check is not triggered. That is, the target display is not powered off. In embodiments of this application, after the CRC error is detected, the PSR function is disabled in a timely manner, so that the target display can be prevented from performing self-check, the target display can be prevented from being powered off, and a problem of a black screen flicker can be avoided.

In another embodiment, if the target display of the notebook computer does not support the PSR function, for example, the target display is the display A, the PSR configuration item corresponding to the target display in the first PSR configuration list is "disable". In this scenario, even if a CRC error is detected, S301∼S305 may not be performed.

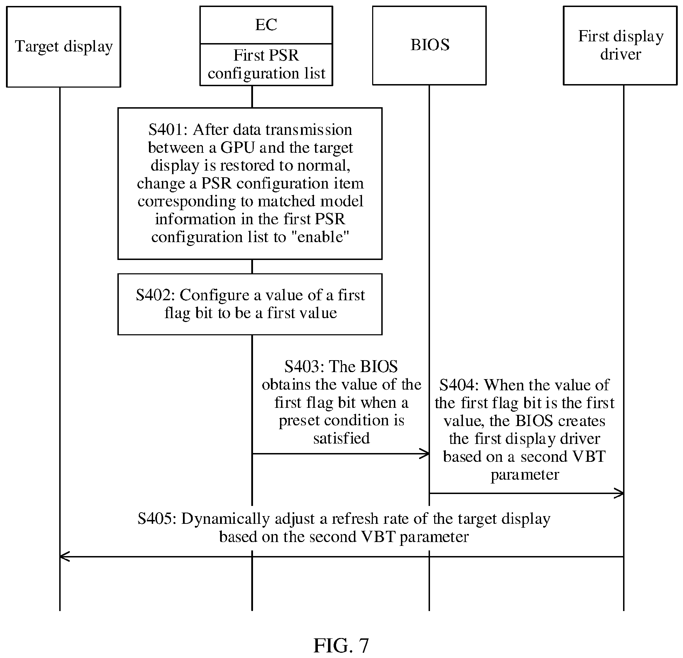

In some other embodiments, as shown in FIG. 7, the display control method may further include the following steps.

S401: After data transmission between the GPU and the target display is restored to normal, the EC changes the PSR configuration item corresponding to the matched model information in the first PSR configuration list to "enable".

For example, that data transmission between the GPU and the target display is restored to normal may be that no CRC error exists in display data transmitted between the GPU and the target display.

For example, the EC does not receive, in a plurality of consecutive periods, a CRC error reported by the target display, and the EC may determine that data transmission between the GPU and the target display is restored to normal, and change the PSR configuration item corresponding to the matched model information in the first PSR configuration list to "enable". For another example, a plurality of consecutive frames of transmitted data (a plurality of consecutive frames of display data from the GPU) checked by the target display do not have a CRC error, and then that there is no CRC error between the GPU and the target display currently is reported to the EC. In this way, the EC may also determine that data transmission between the GPU and the target display is restored to normal, and change the PSR configuration item corresponding to the matched model information in the first PSR configuration list to "enable".

In addition, in the first PSR configuration list, each piece of display model information corresponds to a PSR configuration item. After data transmission between the GPU and the target display is restored to normal, energy saving can be effectively implemented by enabling the PSR function. In this case, the EC may change the PSR configuration item corresponding to the matched model information in the first PSR configuration list to "enable".

S402: The EC configures the value of the first flag bit to the first value.

In some embodiments, the EC may write the first value into the first register corresponding to the first flag bit, to overwrite the original second value in the first register.

S403: The BIOS obtains the value of the first flag bit when a preset condition is satisfied.

In some embodiments, S403 is the same as S104 in the foregoing embodiment, and details are not described herein again.

S404: When the value of the first flag bit is the first value, the BIOS creates the first display driver based on the second VBT parameter.

In some embodiments, in a scenario in which data transmission between the GPU and the target display is abnormal, the notebook computer controls the target display by using the second display driver. After data transmission between the GPU and the target display is restored to normal, the BIOS loads the second VBT parameter to enable the PSR function. In a process of loading the second VBT parameter, the second display driver may be first uninstalled, and then the corresponding first display driver is created based on the second VBT parameter. For implementation details of S404, refer to S105 in the foregoing embodiment, and details are not described herein again.

S405: The first display driver dynamically adjusts the refresh rate of the target display based on the second VBT parameter.

In some embodiments, for implementation details of S405, refer to S106 that is the same in the foregoing embodiment, and details are not described herein again.

In this way, after data transmission between the target display and the GPU is restored to normal, the PSR function may be restarted in a timely manner, thereby reducing energy consumption of the notebook computer.

Implementation details that the notebook computer may enable or disable the PSR function based on an actual situation are described below by using several actual application scenarios.

Example scenario 1: is a scenario in which a first notebook computer is powered on. A target display of the first notebook computer is a display A that does not support a PSR function. Refresh rates of the display A include 60 Hz and 90 Hz, and 90 Hz is a default refresh rate.

In a process of powering on the first notebook computer, the first notebook computer may perform S101~S106. In this way, after the first notebook computer is powered on, the PSR function is in a disabled state.

For example, after the first notebook computer is powered on or restarted, the first notebook computer may query the first PSR configuration list for a PSR configuration item corresponding to the target display. For specific implementation details, refer to S101∼S103 in FIG. 5. Then, the PSR function is disabled based on the PSR configuration item corresponding to the target display. For specific implementation details, refer to S104~S106 in FIG. 5.

After the first notebook computer is powered on and the PSR function is disabled, during a period in which the first notebook computer displays a static interface and a dynamic interface, a refresh rate used by the target display remains unchanged.

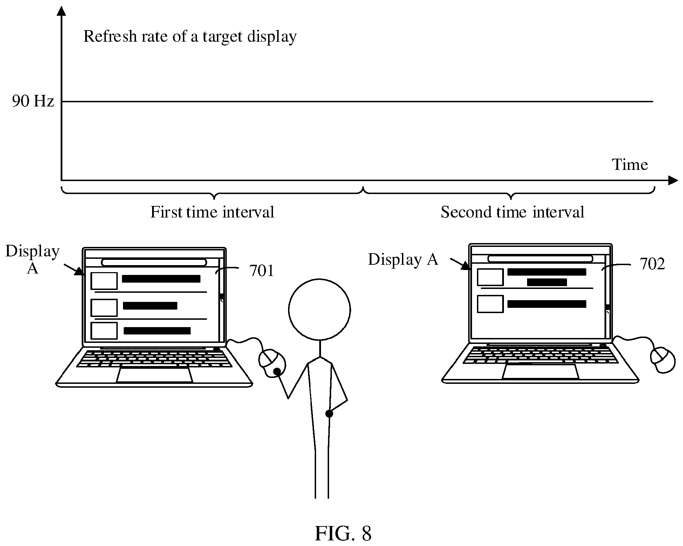

Using an example in which the first notebook computer runs a browser application, as shown in FIG. 8, during a period in which the first notebook computer displays a browser interface 701 in a scrolling manner in response to a user operation, that is, within a first time interval, the refresh rate of the target display of the first notebook computer is 90 Hz. During a period in which the first notebook computer statically displays a browser interface 702, that is, within a second time interval, the refresh rate of the target display of the first notebook computer is still 90 Hz. Similarly, running another application (for example, a game application) is similar. During a period of displaying a static game interface provided by the game application and a period of displaying a dynamic game interface, the refresh rate of the target display of the first notebook computer is kept at 90 Hz.

That is, when the target display of the notebook computer does not support the PSR function, regardless of any application program that runs, a refresh rate is fixed, that is, the PSR function is in a disabled state. In this way, when a main chip of the notebook computer supports the PSR function and the target display does not support the PSR function, the PSR function is not enabled, thereby avoiding unnecessary energy consumption.

Certainly, when the main chip of the notebook computer supports the PSR function, and the target display also supports the PSR function, after power-on or restart, the PSR function may be enabled, thereby reducing energy consumption of the notebook computer by using the PSR function.

Example scenario 2: is a scenario in which a second notebook computer is powered on. A target display of the second notebook computer is a display B that supports a PSR function. Refresh rates of the display B include 60 Hz, 90 Hz, and 120 Hz, and 90 Hz is a default refresh rate.

When the second notebook computer is powered on, the second notebook computer may perform S101~S106. In this way, after the second notebook computer is powered on, the PSR function is in an enabled state.

For example, after the second notebook computer is powered on or restarted, the second notebook computer may query the first PSR configuration list for a PSR configuration item corresponding to the target display. For specific implementation details, refer to S101~S103 in FIG. 5. Then, the PSR function is enabled based on the PSR configuration item corresponding to the target display. For specific implementation details, refer to S104~S106 in FIG. 5.

After the second notebook computer is powered on and the PSR function is enabled, during a period in which the second notebook computer displays a static interface and a dynamic interface, a refresh rate used by the target display may change among 60 Hz, 90 Hz, and 120 Hz.

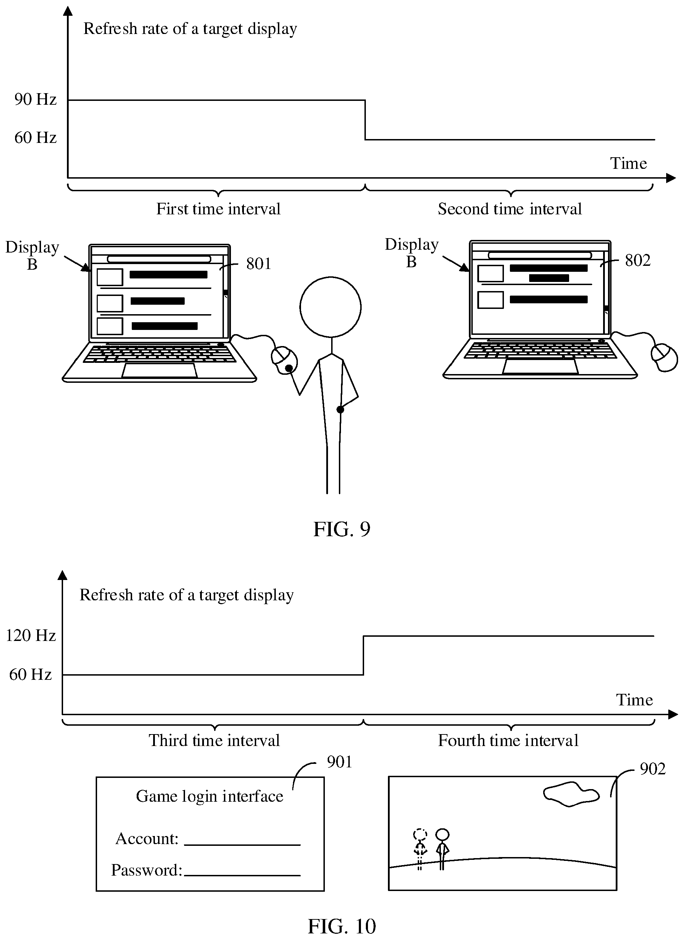

Using an example in which the second notebook computer runs a browser application, as shown in FIG. 9, during a period in which the second notebook computer displays a browser interface 801 in a scrolling manner in response to a user operation, that is, within a first time interval, the refresh rate of the target display is 90 Hz. During a period in which the second notebook computer statically displays a browser interface 802, that is, within a second time interval, the refresh rate of the target display of the second notebook computer is 60 Hz.

Certainly, when different application programs run, refresh requirements for the target display are also different. In this way, when dynamic interfaces provided by different application programs are displayed, actual refresh rates of the second notebook computer may also be different.

As shown in FIG. 10, during a period in which the second notebook computer displays a game login interface 901 (a static display interface), that is, within a third time interval, the refresh rate of the target display is 60 Hz. During a period in which the second notebook computer displays a real-time game interface 902 (a dynamic display interface), that is, within a fourth time interval, the refresh rate of the target display of the second notebook computer is 120 Hz.

That is, when the target display of the second notebook computer supports the PSR function, if different application programs run, or different interfaces are displayed, the refresh rate of the target display may dynamically change.

In conclusion, a notebook computer to which the foregoing display control method is applied can decide to enable/disable the PSR function based on whether a target display supports the PSR function. In this way, the notebook computer is compatible with various types of displays, and unnecessary energy consumption is not generated.

In some embodiments, before the notebook computer enables or disables the PSR function based on the model of the target display, the notebook computer may enable or disable the PSR function based on a default enable/disable status of the PSR function (for example, it is preconfigured that the PSR function is enabled by default or the PSR function is disabled by default). For example, the first flag bit is the first value by default, and the notebook computer may load the second VBT parameter without deciding whether to enable/disable the PSR function, to enable the PSR function by default.

In addition, after the notebook computer disables the PSR function based on the model of the target display, for example, after the first notebook computer is powered on, the PSR function may be enabled in response to a user operation, until the first notebook computer disables the PSR function again based on the model of the target display, or until the first notebook computer detects a CRC error and disables the PSR function, or until the first notebook computer disables the PSR function again in response to a user operation. For example, after the first notebook computer (a notebook computer whose target display does not support the PSR function) enables the PSR function in response to a user operation, the first notebook computer may display a PSR function disabling recommendation interface in some scenarios, for example, a scenario in which a remaining battery level is less than a preset battery level. During a period of displaying the PSR function disabling recommendation interface, the first notebook computer may disable the PSR function in response to an operation of the user for indicating to disable the PSR function.

After the notebook computer enables the PSR function based on the model of the target display, for example, after the second notebook computer is powered on, the PSR function may be disabled in response to a user operation, until the second notebook computer enables the PSR function again based on the model of the target display, or until the second notebook computer enables the PSR function in response to a user operation. For example, after the second notebook computer disables the PSR function in response to a user operation, the second notebook computer may display a PSR function enabling recommendation interface in some scenarios, for example, a scenario in which a remaining battery level is less than a preset battery level. During a period of displaying the PSR function enabling recommendation interface, the second notebook computer may enable the PSR function in response to an operation of the user for indicating to enable the PSR function.

In some embodiments, the notebook computer (for example, the first notebook computer and the second notebook computer) may perform power-on a plurality of times. In a case of power-on for the i^{th} time, the notebook computer may perform the display control method shown in FIG. 5 for the i^{th} time. i is a positive integer greater than 1. In addition, after power-on for the i^{th} time, in a process in which the notebook computer (for example, the first notebook computer and the second notebook computer) performs S101, if the notebook computer does not successfully obtain the VID and the DID from the target display, the EC may read the previously stored VID and DID from the first storage area. If the VID and the DID are successfully obtained from the target display, the newly obtained VID and DID are written into the first storage area to overwrite the originally stored VID and DID.

Example scenario 3: is a scenario in which after a second notebook computer is powered on, a data transmission exception occurs between a GPU and a target display due to external interference.

For example, the foregoing example scenario 3 may be that after the second notebook computer is placed in a particular interference environment, the second notebook computer generates a CRC error. It may be understood that the interference environment may be an environment that can cause Cable CRC interference to the second notebook computer. For example, the interference environment may be a space environment with a first-type electromagnetic interference signal. A signal frequency of the first-type electromagnetic interference signal is close to a first clock frequency of the second notebook computer. For example, a difference between the two is less than a preset threshold. The first clock frequency is a clock frequency at which display data is transmitted between the GPU and the target display. In addition, signal strength of the first-type electromagnetic signal is not less than a preset strength value. For example, the preset strength value may be an empirical value.

In the foregoing example scenario 3, when a CRC error occurs, the second notebook computer may disable a PSR function. A specific process is shown in S301-S305, and details are not described herein again.

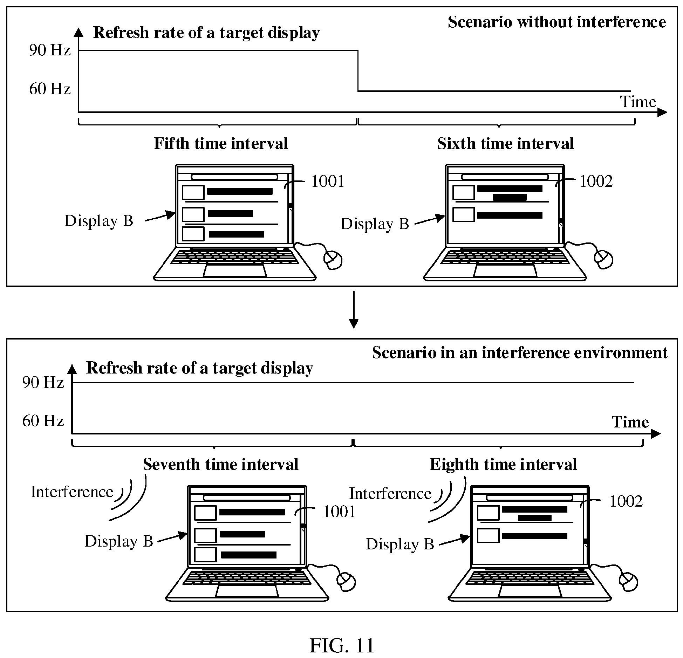

As shown in FIG. 11, before the second notebook computer enters the interference environment, the PSR function is in an enabled state. In this scenario, the second notebook computer may run a browser application. During a period in which the second notebook computer displays a browser interface 1001 in a scrolling manner in response to a user operation, that is, within a fifth time interval, a refresh rate of the target display of the second notebook computer is 90 Hz. During a period in which the second notebook computer statically displays a browser interface 1002, that is, within a sixth time interval, the refresh rate of the target display of the second notebook computer is 60 Hz.

Then, when the second notebook computer enters the interference environment, during a period in which the second notebook computer displays the browser interface 1001 in a scrolling manner in response to a user operation, that is, within a seventh time interval, the refresh rate of the target display of the second notebook computer is 90 Hz. During a period in which the second notebook computer statically displays the browser interface 1002, that is, within an eighth time interval, the refresh rate of the target display of the second notebook computer is still 90 Hz.

Certainly, if the second notebook computer is placed in the interference environment, when another application program that needs to display an interface runs, for example, during running of a game application, the refresh rate of the target display is also kept unchanged at 90 Hz.

In the foregoing embodiment, the target display of the second notebook computer is a display supporting the PSR function, for example, a display B. When a CRC error occurs between the GPU and the target display, the second notebook computer disables the PSR function. It may be understood that in a scenario in which the PSR function is enabled, the CRC error triggers the target display to perform self-check, and the self-check of the target display may cause a black screen flicker. In embodiments of this application, before the CRC error triggers the self-check of the target display, the PSR function may be disabled, to prevent the target display from starting the self-check. In this way, occurrence of a black screen flicker can be prevented. In another example scenario, after a bus between the GPU and the target display loosens or ages, the second notebook computer can also automatically enable or disable the PSR function. It may be understood that, after the bus between the GPU and the target display loosens or ages, data transmission between the GPU and the target display may also be abnormal. According to S301-S305, the second notebook computer can also actively disable the PSR function. Specific details are similar to the scenario in which the second notebook computer encounters interference from the outside, and details are not described herein again.

Example scenario 4: After a second notebook computer is not in an interference environment, for example, a user cancels interference in space in which the second notebook computer is located, or for another example, a user moves the second notebook computer out of space in which interference exists, data transmission between a GPU and a display is restored to normal. For example, display data transmitted between the GPU and the target display has no CRC error. The second notebook computer does not modify a PSR configuration item of the target display in the first PSR configuration list, that is, the second notebook computer keeps a PSR function in a disabled state.

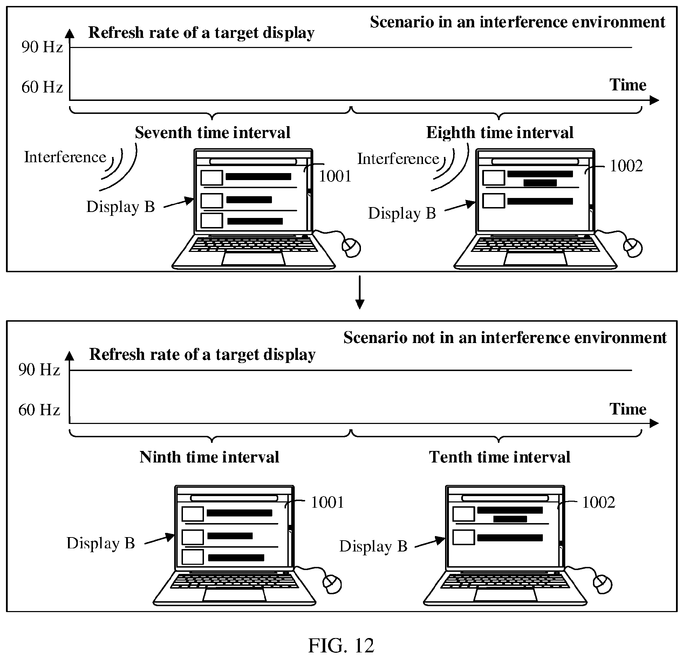

As shown in FIG. 12, when the second notebook computer is placed in an interference environment, during a period in which the second notebook computer displays a browser interface 1001 in a scrolling manner in response to a user operation, that is, within a seventh time interval, a refresh rate of the target display of the second notebook computer is 90 Hz. During a period in which the second notebook computer statically displays a browser interface 1002, that is, within an eighth time interval, the refresh rate of the target display of the second notebook computer is still 90 Hz.

After the second notebook computer is not in the interference environment, the PSR function continues to be kept in a disabled state. In this scenario, the second notebook computer may run a browser application. During a period in which the second notebook computer displays the browser interface 1001 in a scrolling manner in response to a user operation, that is, within a ninth time interval, the refresh rate of the target display of the second notebook computer is 90 Hz. During a period in which the second notebook computer statically displays the browser interface 1002, that is, within a tenth time interval, the refresh rate of the target display of the second notebook computer is 90 Hz.

In another example scenario, when a bus between the GPU and the target display of the second notebook computer loosens or ages, if the second notebook computer replaces the bus between the GPU and the target display, data transmission between the GPU and the display is restored to normal. For example, display data transmitted between the GPU and the target display has no CRC error. The second notebook computer does not modify the PSR configuration item of the target display in the first PSR configuration list, that is, the second notebook computer keeps the PSR function in a disabled state.

Example scenario 5: In a scenario in which a second notebook computer is used, a target display of the second notebook computer is a display B, refresh rates of the display B include 60 Hz, 90 Hz, and 120 Hz, and 90 Hz is a default refresh rate.

After the second notebook computer is placed in an interference environment, during a period of displaying a static interface and a dynamic interface, the refresh rate of the target display is fixedly 90 Hz. After the notebook computer is not in the interference environment, during a period of displaying a static interface and a dynamic interface, the refresh rate used by the target display may change among 60 Hz, 90 Hz, and 120 Hz.

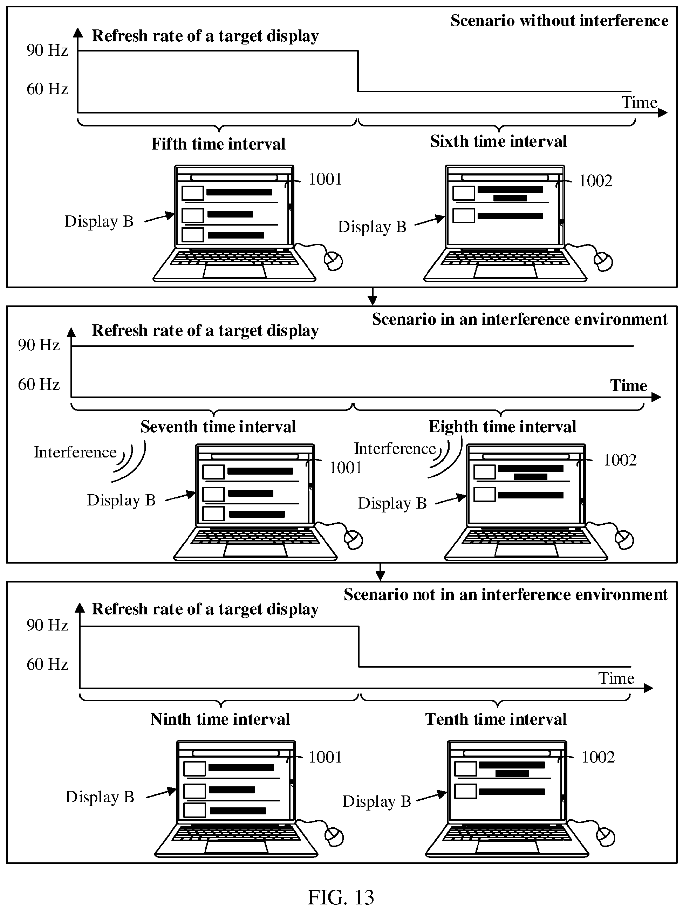

Using running of a browser application as an example, as shown in FIG. 13, when the second notebook computer is located in an environment without interference, and a bus between a GPU and the target display does not loosen or age, during a period in which the second notebook computer displays a browser interface 1001 in a scrolling manner in response to a user operation, that is, within a fifth time interval, the refresh rate of the target display of the second notebook computer is 90 Hz. During a period in which the second notebook computer statically displays a browser interface 1002, that is, within a sixth time interval, the refresh rate of the target display of the second notebook computer is 60 Hz.

Then, when the second notebook computer enters the interference environment, or the bus between the GPU and the target display loosens or ages, during a period in which the second notebook computer displays the browser interface 1001 in a scrolling manner in response to a user operation, that is, within a seventh time interval, the refresh rate of the target display of the second notebook computer is 90 Hz. During a period in which the second notebook computer statically displays the browser interface 1002, that is, within an eighth time interval, the refresh rate of the target display of the second notebook computer is still 90 Hz.

Certainly, if the second notebook computer is placed in the interference environment, or the bus between the GPU and the target display loosens or ages, when another application program that needs to display an interface runs, for example, during running of a game application, the refresh rate of the target display is also kept unchanged at 90 Hz.

If the interference environment causes a CRC error in the second notebook computer, after the second notebook computer is not in the interference environment, during a period in which the second notebook computer displays the browser interface 1001 in a scrolling manner in response to a user operation, that is, within a ninth time interval, the refresh rate of the target display of the second notebook computer is 90 Hz. During a period in which the second notebook computer statically displays the browser interface 1002, that is, within a tenth time interval, the refresh rate of the target display of the second notebook computer is still 60 Hz.

In addition, after the second notebook computer is not in the interference environment, during a period in which the second notebook computer displays a game login interface (a static interface), the refresh rate of the target display is 90 Hz. During a period in which the second notebook computer displays a real-time game interface (a dynamic interface), the refresh rate of the target display may further change to 120 Hz.

If a problem of the bus between the GPU and the target display causes a CRC error, after the bus between the GPU and the target display is replaced, during a period in which the second notebook computer displays the browser interface 1001 in a scrolling manner in response to a user operation, that is, within a ninth time interval, the refresh rate of the target display of the second notebook computer is 90 Hz. During a period in which the second notebook computer statically displays the browser interface 1002, that is, within a tenth time interval, the refresh rate of the target display of the second notebook computer is still 60 Hz.

In some embodiments, after a notebook computer whose target display supports the PSR function (for example, the second notebook computer) is powered on each time, and S101 and S102 are performed, only if it is determined that the target display supports the PSR function, the second notebook computer performs S301∼S305 or S401~S405 based on whether a CRC error occurs between a GPU and the target display. After a notebook computer whose target display does not support the PSR function (for example, the first notebook computer) is powered on each time, and S101 and S102 are performed, if it is determined that the target display does not support the PSR function, regardless of whether a CRC error occurs between a GPU and the target display, the first notebook computer does not perform S301~S305 or S401∼S405.

In some other embodiments, the first PSR configuration list in the notebook computer (for example, the first notebook computer and the second notebook computer) may include a first sublist and a second sublist. Each time the first PSR configuration list is determined or the first PSR configuration list is updated based on the second PSR configuration list, content of the first sublist and content of the second sublist are the same. During running of the notebook computer, the content of the first sublist does not change, so that the notebook computer may conveniently query whether various types of displays support the PSR function. In addition, the content of the second sublist may be updated based on a running situation (for example, whether a CRC error occurs, or whether a CRC error disappears) of the notebook computer. In this way, the PSR function may be dynamically enabled or disabled based on the second sublist during running of the notebook computer. That is, during a period of performing S301∼S305, after determining that the PSR function needs to be disabled, the notebook computer may first check whether a PSR configuration item corresponding to the target display in the first sublist is "disable". If the PSR configuration item corresponding to the target display in the first sublist is "disable", a subsequent step does not need to be performed. During a period of performing S401~S405, after determining that the PSR function needs to be enabled, the notebook computer may first check whether a PSR configuration item corresponding to the target display in the first sublist is "disable". If the PSR configuration item corresponding to the target display in the first sublist is "disable", a subsequent step does not need to be performed.

In some other embodiments, the first PSR configuration list in the notebook computer (for example, the first notebook computer and the second notebook computer) may alternatively be a single list. The first PSR configuration list further includes a first entry corresponding to type information of each type of display. The first entry indicates whether the corresponding display supports the PSR function.

In an initial phase, content of a first entry and content of a PSR configuration item of a same display are the same. During running of the notebook computer, the content of the first entry does not change, so that the notebook computer may conveniently query whether various types of displays support the PSR function. In addition, the content of the PSR configuration item may be updated based on a running situation (for example, whether a CRC error occurs, or whether a CRC error disappears) of the notebook computer. In this way, during a period of performing S301∼S305, after determining that the PSR function needs to be disabled, the notebook computer may determine whether the corresponding first entry of the target display in the first PSR configuration list is "disable". If the first entry is "disable", a subsequent step does not need to be performed. During a period of performing S401~S405, after determining that the PSR function needs to be enabled, the notebook computer may determine whether the corresponding first entry of the target display in the first PSR configuration list is "disable". If the first entry is "disable", a subsequent step does not need to be performed either.

In some other embodiments, after the PSR configuration item corresponding to the matched model information in the first PSR configuration list is changed from "disable" to "enable", and the PSR function is actually enabled, if a refresh rate does not change in various running scenarios, and energy consumption increases, the PSR configuration item may be restored to "disable", and the PSR function is actually disabled.

In some embodiments, after the notebook computer performs enabling or disabling based on whether a CRC error occurs, the notebook computer may still enable or disable the PSR function in response to an operation of the user. For details, refer to FIG. 3. Then, the notebook computer may still enable or disable the PSR function based on whether a CRC error occurs.

In addition, in some embodiments, as a supply material of the display of the notebook computer changes, a display type that can be configured may be newly added to the notebook computer. For example, a configurable display C is newly added to a notebook computer of the model A. The display C also supports the PSR function. In this way, the second PSR configuration list in the cloud server is also updated. For example, an updated second PSR configuration list is shown as Table 3.

**Table 3**

| Notebook computer model | Configurable display | PSR function |
|---|---|---|
| A | Model information of a display A | Disable |
| | Model information of a display B | Enable |
| | Model information of a display C | Enable |
| B | Model information of a display D | Enable |
| | Model information of a display E | Enable |

After updating the second PSR configuration list, the cloud server may send the second PSR configuration list to the notebook computer. After obtaining the updated second PSR configuration list, the notebook computer updates the first PSR configuration list based on the second PSR configuration list.

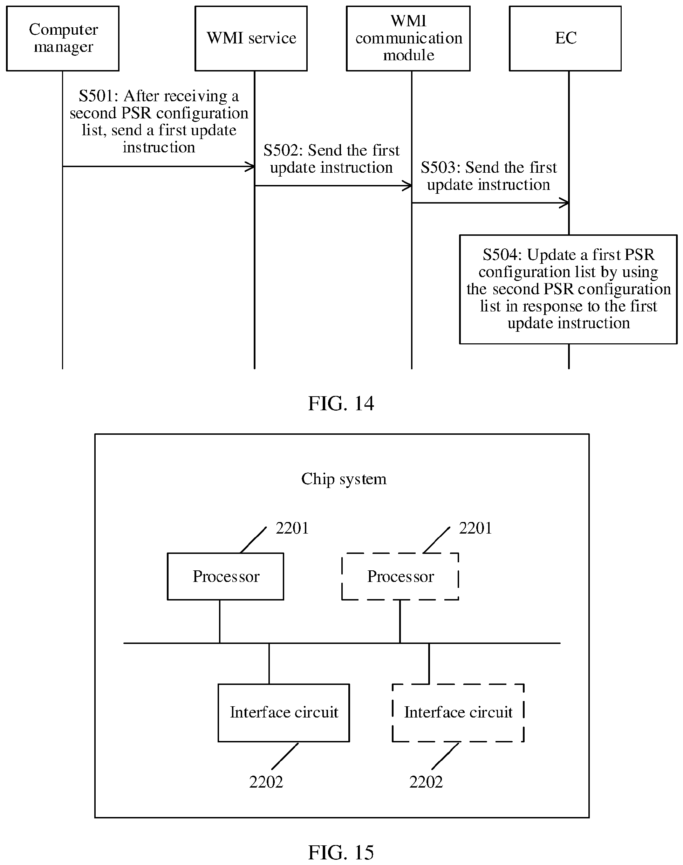

In an implementation, as shown in FIG. 14, the display control method may further include the following steps.

S501: After receiving a second PSR configuration list, a computer manager sends a first update instruction to a WMI service.

The first update instruction may be a WMI instruction, and indicate to update a first PSR configuration list based on the second PSR configuration list.

In some embodiments, after downloading the latest second PSR configuration list from a cloud server, the computer manager generates the first update instruction, and sends the first update instruction to the WMI service.

S502: The WMI service sends the first update instruction to a WMI communication module.

S503: The WMI communication module sends the first update instruction to an EC.

S504: The EC updates the first PSR configuration list by using the second PSR configuration list in response to the first update instruction.

In some embodiments, an updated first PSR configuration list may be generated based on model information and a PSR configuration item that correspond to a model A in the second PSR configuration list. For example, when the updated second PSR configuration list is Table 3, the updated first PSR configuration list is shown as Table 4.

**Table 4**

| Notebook computer model | Configurable display | PSR function |
|---|---|---|
| A | Model information of a display A | Disable |
| | Model information of a display B | Enable |
| | Model information of a display C | Enable |

In some other embodiments, the target display of the notebook computer may be changed for the notebook computer. In a phase of returning to the factory for maintenance, the target display of the notebook computer may be changed. In addition, after downloading the latest second PSR configuration list, the notebook computer may only store the second PSR configuration list, and does not immediately update the first PSR configuration list. In this way, during power-on, when determining that a model of the target display changes, the notebook computer may update the first PSR configuration list by using the stored latest second PSR configuration list.

In an implementation, after reading a VID and a DID of the display each time, that is, after S101 or S102, the EC may further store the read VID and DID in a first storage area. In addition, before storing the currently read VID and DID, the EC may further determine whether the currently read "VID and DID" are the same as the "VID and DID" in the first storage area. When the two are different, the first PSR configuration list is updated by using the second PSR configuration list. When the two are the same, the first PSR configuration list is temporarily not updated by using the second PSR configuration list.

In some embodiments, after the notebook computer updates the first PSR configuration list by using the second PSR configuration list, the notebook computer may determine, based on the updated first PSR configuration list, whether the model of the target display supports enabling of the PSR function. If enabling of the PSR function is supported, the PSR function may be enabled. For a specific implementation process, refer to S101~S106. In addition, after the first PSR configuration list is updated by using the second PSR configuration list, the notebook computer may alternatively disable or enable the PSR function based on an actual working situation. For a specific process, refer to S301~S305 and S401~S405.

In addition, it may be understood that, the application scenarios (for example, the example scenarios 1~5 and the scenario of updating the first PSR configuration list by using the second PSR configuration list) described in the foregoing embodiments are not only applicable to a product testing step, but also applicable to a step after a product is commercialized, and applicable to a step of returning the product to the factory for maintenance. This is not specifically limited in embodiments of this application.

An embodiment of this application further provides an electronic device. The electronic device may include: a memory and one or more processors. The memory is coupled to the processor. The memory is configured to store computer program code, and the computer program code includes computer instructions. When the processor executes the computer instructions, the electronic device may be enabled to perform the steps performed by the mobile phone in the foregoing embodiments. Certainly, the electronic device includes but is not limited to the memory and one or more processors.

In conclusion, an embodiment of this application provides a display control method, which may be applied to an electronic device, for example, an electronic device on which a first display is configured. The first display supports panel self refresh (a PSR function), for example, a display B. The electronic device may enable the PSR function or disable the PSR function for the first display. When panel self refresh is enabled, a refresh rate of the first display may dynamically change.

In some embodiments, the electronic device may display a first interface in response to an operation of a user. The electronic device may also display a second interface in response to an operation of the user. The first interface and the second interface may be application interfaces provided by a same application program, or may be application interfaces provided by different application programs.

For example, the operation of the user may include: an operation for indicating to run a specific application program and an operation for indicating interface switching. The specific application program refers to an application having an interface display requirement.

For example, the user operation includes an operation for indicating to run a browser and an operation for indicating to display a browser interface in a scrolling manner. The electronic device may display the browser interface of the browser application in response to the operation for indicating to run the browser.

Within some time periods (for example, a first time period), content displayed in the browser interface remains unchanged. In this case, the browser interface is a static first interface, image frames displayed in the first interface at all time points of the first time period are the same, and it may be described as that the first interface displays a first group of image frames. For example, an image frame in the first group of image frames may be a part that is of a picture displayed on the first display and that does not include a toolbar.

Within some other time periods (for example, a second time period), in response to an operation of sliding for browsing by the user, interface content displayed in the browser interface on the electronic device changes in real time. In this case, the browser interface is a dynamic second interface, and image frames displayed in the second interface at a plurality of time points of the second time period are different. For example, content of image frames corresponding to a plurality of groups of adjacent time points is different. In addition, the image frames displayed in the second time period may be referred to as a second group of image frames displayed in the second interface. For example, an image frame in the second group of image frames may also be a part that is of a picture displayed on the first display and that does not include a toolbar.

For another example, the operation of the user includes an operation for indicating to run a video application, an operation for indicating to play a video, and an operation for indicating to pause playing of a video. After the video application runs, the electronic device may display a video playing interface in response to the operation for indicating to play a video.

Within some time periods (for example, a first time period), for example, after the electronic device detects an operation of the user for indicating to pause playing of a video, content displayed in the video playing interface remains unchanged. In this case, the video playing interface is a static first interface, image frames displayed in the first interface at all time points of the first time period are the same, and it may be described as that the first interface displays a first group of image frames. For example, an image frame in the first group of image frames may be content displayed in a video playing window in the video playing interface.

Within some other time periods (for example, a second time period), the electronic device detects an operation of the user for indicating to play a video, and interface content displayed in the video playing interface changes in real time. In this case, the video playing interface is a dynamic second interface, image frames displayed in the second interface at a plurality of time points of the second time period are different, and it may be described as that the second interface displays a second group of image frames. For example, an image frame in the second group of image frames may also be content displayed in a video playing window in the video playing interface.

In some embodiments, hardware of the first display supports the PSR function, and the electronic device may automatically enable the PSR function. After the PSR function is enabled, during display of the first interface, for example, within a first time period, the electronic device displays a first group of image frames in the first interface, where all image frames in the first group of image frames have same content, and a refresh rate of the first display within the first time period is a first refresh rate. A second interface is displayed in response to an operation of the user after the first time period. The electronic device displays a second group of image frames in the second interface within a second time period, where a plurality of image frames in the second group of image frames have different content, a refresh rate of the first display within the second time period is a second refresh rate.

When the PSR function is enabled, the refresh rate of the first display may dynamically change during a period in which the electronic device displays the static first interface and a period in which the electronic device displays the dynamic second interface. In addition, the second refresh rate during the period in which the dynamic second interface is displayed is greater than the first refresh rate during the period in which the static second interface is displayed.

In some embodiments, the electronic device may disable the PSR function when determining that a current scenario satisfies a first condition. The first condition is an environmental condition that causes a data transmission exception between a display and a GPU in the electronic device. For example, the first condition may be that the electronic device is located in space in which a first electromagnetic interference signal (that is, a first-type electromagnetic interference signal) exists. For another example, the first condition may alternatively be that a third-party device performs charging by using an external interface provided by the electronic device. For another example, the first condition may alternatively be that a bus between the GPU and a target display (for example, the first display) loosens or ages.

In an example embodiment, after the second time period, the electronic device determines that the current scenario satisfies the first condition. In this scenario, the electronic device may actively disable the PSR function.

In this way, the first interface is displayed in response to an operation of the user after the second time period. The electronic device displays the first group of image frames in the first interface within a third time period, where a refresh rate of the first display within the third time period is a third refresh rate. During the third time period, the electronic device is located in space in which a first electromagnetic interference signal exists. The second interface is displayed in response to an operation of the user after the third time period. The electronic device displays the second group of image frames in the second interface within a fourth time period, where a refresh rate of the first display within the fourth time period is the third refresh rate, where during the fourth time period, the electronic device is located in the space in which the first electromagnetic interference signal exists.

It may be understood that based on impact of the first electromagnetic interference signal, the refresh rate of the first display within the third time period is the same as that within the fourth time period.

In some embodiments, if the electronic device determines that the current scenario no longer satisfies the first condition, for example, if the electronic device is not located in the space in which the first electromagnetic interference signal exists, or for another example, if the third-party device is disconnected from the electronic device, or for another example, after the bus between the target display and the GPU in the electronic device is changed, the electronic device still keeps the PSR function in a disabled state.

That is, the first interface is displayed in response to an operation of the user after the fourth time period. The electronic device displays the first group of image frames in the first interface within a fifth time period, where a refresh rate of the first display within the fifth time period is the third refresh rate. The second interface is displayed in response to an operation of the user after the fifth time period. The electronic device displays the second group of image frames in the second interface within a sixth time period, where a refresh rate of the first display within the sixth time period is the third refresh rate, where between a start moment of the fifth time period and an end moment of the sixth time period, the electronic device is not located in the space in which the first electromagnetic interference signal exists, that is, the current scenario does not satisfy the first condition.

In some other embodiments, if the electronic device determines that the current scenario no longer satisfies the first condition, for example, if the electronic device is not located in the space in which the first electromagnetic interference signal exists, or for another example, if the third-party device is disconnected from the electronic device, or for another example, after the bus between the target display and the GPU in the electronic device is changed, the electronic device may enable the PSR function.

In this way, the first interface is displayed in response to an operation of the user after the fourth time period. The electronic device displays the first group of image frames in the first interface within a seventh time period, where a refresh rate of the first display within the seventh time period is the first refresh rate. During the seventh time period, the electronic device is not located in the space in which the first electromagnetic interference signal exists. The second interface is displayed in response to an operation of the user after the seventh time period. The electronic device displays the second group of image frames in the second interface within an eighth time period, where a refresh rate of the first display within the eighth time period is the second refresh rate, where during the eighth time period, the electronic device is not located in the space in which the first electromagnetic interference signal exists, and the second refresh rate is greater than the first refresh rate.

In some embodiments, after the electronic device is located in the space in which the first electromagnetic interference signal exists, the method further includes: generating, by the electronic device, an integrity check CRC exception if data transmitted between a GPU of the electronic device and the first display has a data loss; and disabling, by the electronic device, the PSR function after the electronic device generates the CRC exception.

In some embodiments, the electronic device may display a third interface in response to a first operation of the user. For example, the third interface may be a monitor configuration interface 301 including a refresh rate selection window 304.

The third interface includes a target option, for example, an option 308 identified as "Auto" in FIG. 3. The target option indicates to enable the PSR function.

After generating the integrity check CRC exception, the electronic device sets the target option to non-selectable, or hides the target option, or does not respond to any operation performed by the user on the target option. In some embodiments, after the electronic device generates the CRC exception and disables the PSR function, the electronic device enables the PSR function when N consecutive first image frames pass CRC. The first image frame is display data sent by the GPU in the electronic device to the first display, and N is a positive integer greater than 0.

Because the first image frame passes integrity check, the first display may draw the first image frame on a panel.

In some embodiments, the electronic device further includes an embedded controller EC and a basic input output system BIOS, a first list is configured in the electronic device, the first list includes first model information and a first identifier, the first model information is model information of a display adapted to the electronic device, and the first identifier indicates the display corresponding to the first model information to enable the PSR function; and before the displaying a first interface in response to an operation of a user, the method further includes: obtaining, by the EC, first information (a DID and a VID of a display B) from the first display (for example, the display B) after the electronic device is powered on, where the first information is model information prestored in the first display; setting, by the EC, a value of a first flag bit to a first value when the first information matches the first model information (matched model information) in the first list (a first PSR configuration list); and loading, by the BIOS, a first parameter (a second VBT parameter) when the first flag bit is the first value, where the first parameter is used to configure a first display driver, and the first display driver is configured to control the first display to use a variable refresh rate.

In some embodiments, the disabling, by the electronic device, the PSR function after the electronic device generates the CRC exception includes: changing, by the EC, the first identifier (a PSR configuration item whose value is "enable") in the first list to a second identifier (a PSR configuration item whose value is "disable"), where the second identifier indicates the display corresponding to the first model information to disable the PSR function; setting, by the EC, the first flag bit to a second value; and loading, by the BIOS, a second parameter (a first VBT parameter) when the first flag bit is set to the second value, where the second parameter is used to configure a second display driver, and the second display driver is configured to indicate the first display to use a fixed refresh rate.

In some embodiments, after the electronic device generates the CRC exception and disables the PSR function, the method further includes: restoring the second identifier in the first list to the first identifier after N consecutive first image frames pass CRC; setting, by the EC, the first flag bit to the first value; and loading, by the BIOS, the first parameter when the first flag bit is set to the first value, where the first parameter is used to configure the first display driver, and the first display driver is configured to control the first display to use a variable refresh rate.

In some embodiments, after the obtaining first information from the first display, the method further includes: storing the first information in a first storage area; and after the electronic device is restarted, the method further includes: obtaining, by the EC, the first information from the first storage area when the first information fails to be obtained from the first display; setting, by the EC, the value of the first flag bit to the first value when the first information matches the first model information in the first list; and loading, by the BIOS, the first parameter when the first flag bit is the first value, where the first parameter is used to configure the first display driver, and the first display driver is configured to control the first display to use a variable refresh rate.

In some embodiments, the electronic device is communicatively connected to a cloud server, and the method further includes: when a second list (a second PSR configuration list) is obtained from the cloud server, determining, by the EC in the second list, the first model information that matches the electronic device, second model information, the first identifier, and a third identifier, where the second model information is model information of another display adapted to the electronic device, and the third identifier indicates the display corresponding to the second model information whether to enable the PSR function; and generating, by the EC, a new first list based on the first model information, the second model information, the first identifier, and the third identifier in the second list.

In some embodiments, before the generating a new first list, the method further includes: after the first display of the electronic device is changed to a second display, determining, by the EC, that second information obtained from the second display is different from the first information stored in a first storage area, where the second information is model information prestored in the second display.

In some embodiments, the electronic device may further update the target display, for example, change the originally configured first display to the second display. After the first display of the electronic device is changed to the second display, and it is determined that the current scenario does not satisfy the first condition, the electronic device may automatically enable or disable the PSR function based on whether hardware of the second display supports the PSR function.

For example, if the hardware of the second display does not support the PSR function, for example, the second display is a display A, the electronic device may disable the PSR function. In this way, the electronic device displays the first interface in response to an operation of the user. The electronic device displays the first group of image frames in the first interface within a ninth time period, where a refresh rate of the second display within the ninth time period is a fourth refresh rate. The second interface is displayed in response to an operation of the user after the ninth time period. The electronic device displays the second group of image frames in the second interface within a tenth time period, where a refresh rate of the second display within the tenth time period is the fourth refresh rate, and the second display does not support the PSR function.

An embodiment of this application further provides a chip system. The chip system may be applied to the electronic device in the foregoing embodiments. As shown in FIG. 15, the chip system includes at least one processor 2201 and at least one interface circuit 2202. The processor 2201 may be the processor in the foregoing electronic device. The processor 2201 and the interface circuit 2202 may be interconnected through a line. The processor 2201 may receive computer instructions from the memory of the foregoing electronic device through the interface circuit 2202 and execute the computer instructions. When the computer instructions are executed by the processor 2201, the electronic device may be caused to perform the steps performed by the mobile phone in the foregoing embodiments. Certainly, the chip system may further include another discrete component. This is not specifically limited in embodiments of this application.

In some embodiments, the foregoing descriptions about implementations allow a person skilled in the art to clearly understand that, for the purpose of convenient and brief description, division into the foregoing functional modules is taken as an example for illustration. In actual application, the foregoing functions can be allocated to different functional modules for implementation based on a requirement, that is, an inner structure of an apparatus is divided into different functional modules to implement all or some of the functions described above. For a specific working process of the foregoing described system, apparatus, and unit, refer to a corresponding process in the foregoing method embodiments. Details are not described herein again.

Functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes: any medium that can store program code, for example, a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A display control method, applied to an electronic device, wherein the electronic device comprises a first display, the first display (194) supports a panel self refresh, PSR, function, and the method comprises:
monitoring, by the electronic device, whether an integrity-check, CRC, error occurs in data transmission of image frames between a graphics processing unit, GPU, (110) of the electronic device and the first display so as to detect a CRC error in the data transmission; wherein the electronic device is configured, when the PSR function is enabled, if a CRC error in the data transmission occurs, to trigger the first display to perform a self-check process, and in the self-check process the first display restarts, thereby causing a black screen flicker;
wherein the method further comprises:
displaying a first interface in response to an operation of a user;
displaying, by the electronic device, in a first time period, during which no CRC error in the data transmission is detected, a first group of image frames in the first interface, wherein all image frames in the first group of image frames have same content, and
enabling, by the electronic device, the PSR function for controlling a refresh rate of the first display (194) within the first time period to be a first refresh rate;
displaying a second interface in response to an operation of the user after the first time period;
displaying, by the electronic device, in a second time period, during which no CRC error in data transmission is detected, a second group of image frames in the second interface, wherein a plurality of image frames in the second group of image frames have different content, and the refresh rate of the first display (194) within the second time period is a second refresh rate, and the second refresh rate is greater than the first refresh rate;
wherein the method further comprises:
displaying the first interface in response to an operation of the user after the second time period;
displaying, by the electronic device, the first group of image frames in the first interface within a third time period, wherein during the third time period, the electronic device is located in a space in which a first electromagnetic interference signal exists and the method comprises generating, by the electronic device, an integrity-check CRC exception in response to detecting a CRC error in the data transmission between the GPU (110) and the first display (194) caused by the first electromagnetic interference signal, and further comprises, by the electronic device, disabling the PSR function in response to the CRC exception, and controlling the refresh rate of the first display within the third time period to be a third refresh rate;
displaying the second interface in response to an operation of the user after the third time period; and
displaying, by the electronic device, the second group of image frames in the second interface within a fourth time period, and controlling the refresh rate of the first display within the fourth time period to be the third refresh rate, wherein during the fourth time period, the electronic device is located in the space in which the first electromagnetic interference signal exists;
wherein the method further comprises:
displaying the first interface in response to an operation of the user after the fourth time period;
displaying, by the electronic device, the first group of image frames in the first interface within a fifth time period, wherein during the fifth time period, the electronic device is no longer located in the space in which the first electromagnetic interference signal exists, and the method comprises maintaining, by the electronic device, the PSR function in a disabled state and controlling the refresh rate of the first display within the fifth time period to have the third refresh rate in response to determining that the electronic device is no longer located in the space in which the first electromagnetic interference signal exists;
displaying the second interface in response to an operation of the user after the fifth time period; and
displaying, by the electronic device, the second group of image frames in the second interface within a sixth time period, wherein during the sixth time period, the electronic device is no longer located in the space in which the first electromagnetic interference signal exists, and the method comprises controlling the refresh rate of the first display within the sixth time period to be the third refresh rate.

2. The method according to claim 1, wherein after the electronic device generates the CRC exception, the method further comprises:
displaying a third interface (301) in response to a first operation of the user, wherein the third interface comprises a target option, the target option (308) indicates to enable the PSR function, and the target option is non-selectable.

3. The method according to claim 1, wherein after the electronic device generates the CRC exception and disables the PSR function, the method further comprises:
enabling, by the electronic device, the PSR function after N consecutive first image frames pass CRC, wherein the first image frame is display data sent by the GPU (110) in the electronic device to the first display (194), and N is a positive integer greater than 0.

4. The method according to claim 1, wherein the electronic device further comprises an embedded controller, EC, (210) and a basic input output system, BIOS, a first list is configured in the electronic device, the first list comprises first model information and a first identifier, the first model information is model information of the first display (194) of the electronic device, and the first identifier indicates that the PSR function is enabled for the display corresponding to the first model information; and before the displaying a first interface in response to an operation of a user, the method further comprises:
obtaining, by the EC (210), first information from the first display (194) after the electronic device is powered on, wherein the first information is model information prestored in the first display;
setting, by the EC (210), a value of a first flag bit to a first value when the first information matches the first model information in the first list; and
creating, by the BIOS, a first display driver based on a first parameter when the first flag bit is the first value, wherein the first display driver is configured to control the first display (194) to use a variable refresh rate.

5. The method according to claim 4, wherein the disabling, by the electronic device, the PSR function after the electronic device generates the CRC exception comprises:
changing, by the EC (210), the first identifier in the first list to a second identifier, wherein the second identifier indicates the display (194) corresponding to the first model information to disable the PSR function;
setting, by the EC (210), the first flag bit to a second value; and
creating, by the BIOS, a second display driver based on a second parameter when the first flag bit is set to the second value, wherein the second display driver is configured to indicate the first display to use a fixed refresh rate.

6. The method according to claim 5, wherein after the electronic device generates the CRC exception and disables the PSR function, the method further comprises:
restoring the second identifier in the first list to the first identifier after N consecutive first image frames pass CRC;
setting, by the EC (210), the first flag bit to the first value; and
creating, by the BIOS, the first display driver based on the first parameter when the first flag bit is set to the first value, wherein the first display driver is configured to control the first display (194) to use a variable refresh rate.

7. The method according to claim 5, wherein after the obtaining first information from the first display (194), the method further comprises: storing the first information in a first storage area; and
after the electronic device is restarted, the method further comprises: obtaining, by the EC (210), the first information from the first storage area when the first information fails to be obtained from the first display (194);
setting, by the EC (210), the value of the first flag bit to the first value when the first information matches the first model information in the first list; and
creating, by the BIOS, the first display driver based on the first parameter when the first flag bit is the first value, wherein the first display driver is configured to control the first display (194) to use a variable refresh rate.

8. The method according to claim 5, wherein the electronic device is communicatively connected to a cloud server, and the method further comprises:
when a second list is obtained from the cloud server, determining, by the EC (210) in the second list, the first model information that matches the electronic device, second model information, the first identifier, and a third identifier, wherein the second model information is model information of another display adapted to the electronic device, and the third identifier indicates the display corresponding to the second model information whether to enable the PSR function; and
generating, by the EC (210), a new first list based on the first model information, the second model information, the first identifier, and the third identifier in the second list.

9. The method according to claim 8, wherein before the generating a new first list, the method further comprises:
after the first display (194) of the electronic device is changed to a second display, determining, by the EC (210), that second information obtained from the second display is different from the first information stored in a first storage area, wherein the second information is model information prestored in the second display.

10. The method according to any one of claims 1-9, wherein after the first display (194) of the electronic device is changed to a second display, the method further comprises:
displaying the first interface in response to an operation of the user;
displaying, by the electronic device, the first group of image frames in the first interface within a ninth time period, wherein a refresh rate of the second display within the ninth time period is a fourth refresh rate;
displaying the second interface in response to an operation of the user after the ninth time period; and
displaying, by the electronic device, the second group of image frames in the second interface within a tenth time period, wherein a refresh rate of the second display within the tenth time period is the fourth refresh rate, and the second display does not support the PSR function.

11. An electronic device, wherein the electronic device comprises one or more processors and a memory; and the memory is coupled to the processor, the memory is configured to store computer program code, the computer program code comprises computer instructions, and when the one or more processors execute the computer instructions, the one or more processors are configured to perform the method according to any one of claims 1-10.

12. A computer storage medium, comprising computer instructions, wherein when the computer instructions are run on an electronic device, the electronic device is enabled to perform the method according to any one of claims 1-10.

## Patentansprüche

1. Anzeigesteuerungsverfahren, das auf eine elektronische Vorrichtung angewendet wird, wobei die elektronische Vorrichtung ein erstes Display umfasst, wobei das erste Display (194) eine Panel-Self-Refresh-Funktion (PSR-Funktion) unterstützt, und wobei das Verfahren umfasst:
Überwachen durch die elektronische Vorrichtung, ob ein Integritätsprüfungsfehler (CRC-Fehler) bei der Datenübertragung von Bildrahmen zwischen einer Grafikverarbeitungseinheit (GPU, 110) der elektronischen Vorrichtung und dem ersten Display auftritt, um einen CRC-Fehler bei der Datenübertragung zu erkennen; wobei die elektronische Vorrichtung dazu konfiguriert ist, bei aktivierter PSR-Funktion, falls ein CRC-Fehler bei der Datenübertragung auftritt, das erste Display dazu zu veranlassen, einen Selbstprüfungsprozess durchzuführen, wobei das erste Display im Selbstprüfungsprozess neu startet, was zu einem Schwarzbildflackern führt;
wobei das Verfahren ferner umfasst:
Anzeigen einer ersten Schnittstelle als Reaktion auf eine Benutzeroperation;
Anzeigen einer ersten Gruppe von Bildrahmen in der ersten Schnittstelle durch die elektronische Vorrichtung in einem ersten Zeitabschnitt, während dem kein CRC-Fehler bei der Datenübertragung erkannt wird, wobei alle Bildrahmen in der ersten Gruppe von Bildrahmen denselben Inhalt aufweisen, und
Aktivieren der PSR-Funktion durch die elektronische Vorrichtung, um eine Bildwiederholrate des ersten Displays (194) innerhalb des ersten Zeitabschnitts auf eine erste Bildwiederholrate zu steuern;
Anzeigen einer zweiten Schnittstelle als Reaktion auf eine Benutzeroperation nach dem ersten Zeitabschnitt;
Anzeigen einer zweiten Gruppe von Bildrahmen in der zweiten Schnittstelle durch die elektronische Vorrichtung in einem zweiten Zeitabschnitt, während dem kein CRC-Fehler bei der Datenübertragung erkannt wird, wobei eine Mehrzahl von Bildrahmen in der zweiten Gruppe von Bildrahmen unterschiedliche Inhalte aufweisen und die Bildwiederholrate des ersten Displays (194) innerhalb des zweiten Zeitabschnitts eine zweite Bildwiederholrate ist, und wobei die zweite Bildwiederholrate größer als die erste Bildwiederholrate ist;
wobei das Verfahren ferner umfasst:
Anzeigen der ersten Schnittstelle als Reaktion auf eine Benutzeroperation nach dem zweiten Zeitabschnitt;
Anzeigen der ersten Gruppe von Bildrahmen durch die elektronische Vorrichtung in der ersten Schnittstelle innerhalb eines dritten Zeitraums, wobei sich die elektronische Vorrichtung während des dritten Zeitraums in einem Raum befindet, in dem ein erstes elektromagnetisches Störsignal vorhanden ist, und wobei das Verfahren das Erzeugen einer Integritätsprüfungs-CRC-Ausnahme durch die elektronische Vorrichtung als Reaktion auf das Erkennen eines CRC-Fehlers bei der Datenübertragung zwischen der GPU (110) und dem ersten Display (194) umfasst, der durch das erste elektromagnetische Störsignal verursacht wurde, und ferner das Deaktivieren der PSR-Funktion durch die elektronische Vorrichtung als Reaktion auf die CRC-Ausnahme sowie das Steuern der Bildwiederholrate des ersten Displays innerhalb des dritten Zeitraums auf eine dritte Bildwiederholrate umfasst;
Anzeigen der zweiten Schnittstelle als Reaktion auf eine Benutzerbedienung nach dem dritten Zeitraum; und
Anzeigen der zweiten Gruppe von Bildrahmen durch die elektronische Vorrichtung in der zweiten Schnittstelle innerhalb eines vierten Zeitraums und Steuern der Bildwiederholrate des ersten Displays innerhalb des vierten Zeitraums auf die dritte Bildwiederholrate, wobei sich die elektronische Vorrichtung während des vierten Zeitraums in dem Raum befindet, in dem das erste elektromagnetische Störsignal vorhanden ist;
wobei das Verfahren ferner umfasst:
Anzeigen der ersten Schnittstelle als Reaktion auf eine Benutzerbedienung nach dem vierten Zeitraum;
Anzeigen der ersten Gruppe von Bildrahmen durch die elektronische Vorrichtung in der ersten Schnittstelle innerhalb eines fünften Zeitraums, wobei sich die elektronische Vorrichtung während des fünften Zeitraums nicht mehr in dem Raum befindet, in dem das erste elektromagnetische Störsignal vorhanden ist, und wobei das Verfahren das Beibehalten der PSR-Funktion im deaktivierten Zustand durch die elektronische Vorrichtung sowie das Steuern der Bildwiederholrate des ersten Displays innerhalb des fünften Zeitraums auf die dritte Bildwiederholrate als Reaktion auf die Bestimmung umfasst, dass sich die elektronische Vorrichtung nicht mehr in dem Raum befindet, in dem das erste elektromagnetische Störsignal vorhanden ist;
Anzeigen der zweiten Schnittstelle als Reaktion auf eine Benutzerbedienung nach dem fünften Zeitraum; und
Anzeigen der zweiten Gruppe von Bildrahmen durch die elektronische Vorrichtung in der zweiten Schnittstelle innerhalb eines sechsten Zeitraums, wobei sich die elektronische Vorrichtung während des sechsten Zeitraums nicht mehr in dem Raum befindet, in dem das erste elektromagnetische Störsignal vorhanden ist, und wobei das Verfahren das Steuern der Bildwiederholrate des ersten Displays innerhalb des sechsten Zeitraums auf die dritte Bildwiederholrate umfasst.

2. Verfahren nach Anspruch 1, wobei das Verfahren nach dem Erzeugen der CRC-Ausnahme durch das elektronische Gerät ferner umfasst:
Anzeige einer dritten Schnittstelle (301) als Reaktion auf eine erste Benutzeraktion, wobei die dritte Schnittstelle eine Zieloption umfasst, wobei die Zieloption (308) die Aktivierung der PSR-Funktion anzeigt und die Zieloption nicht auswählbar ist.

3. Verfahren nach Anspruch 1, wobei das Verfahren nach der Erzeugung der CRC-Ausnahme durch die elektronische Vorrichtung und der Deaktivierung der PSR-Funktion ferner umfasst:
Aktivierung der PSR-Funktion durch die elektronische Vorrichtung, nachdem N aufeinanderfolgende erste Bildrahmen die CRC bestanden haben, wobei der erste Bildrahmen Anzeigedaten sind, die von der GPU (110) in der elektronischen Vorrichtung an das erste Display (194) gesendet werden, und N eine positive ganze Zahl größer als 0 ist.

4. Verfahren nach Anspruch 1, wobei die elektronische Vorrichtung ferner einen eingebetteten Controller, EC, (210) und ein Basis-Ein-/Ausgabesystem, BIOS, umfasst, wobei eine erste Liste in der elektronischen Vorrichtung konfiguriert ist, wobei die erste Liste erste Modellinformationen und einen ersten Bezeichner umfasst, wobei die ersten Modellinformationen Modellinformationen des ersten Displays (194) der elektronischen Vorrichtung sind und der erste Bezeichner anzeigt, dass die PSR-Funktion für das Display aktiviert ist, das den ersten Modellinformationen entspricht; und wobei das Verfahren vor dem Anzeigen einer ersten Schnittstelle als Reaktion auf eine Benutzeraktion ferner umfasst:
Erhalten erster Informationen durch den EC (210) von dem ersten Display (194), nachdem die elektronische Vorrichtung eingeschaltet wurde, wobei die ersten Informationen in dem ersten Display vorab gespeicherte Modellinformationen sind;
Setzen eines Werts eines ersten Flag-Bits auf einen ersten Wert durch den EC (210), wenn die ersten Informationen mit den ersten Modellinformationen in der ersten Liste übereinstimmen; und
Erstellen eines ersten Anzeigetreibers durch das BIOS basierend auf einem ersten Parameter, wenn das erste Flag-Bit den ersten Wert aufweist, wobei der erste Anzeigetreiber konfiguriert ist, um das erste Display (194) so zu steuern, dass es eine variable Bildwiederholrate verwendet.

5. Verfahren nach Anspruch 4, wobei die Deaktivierung der PSR-Funktion durch die elektronische Vorrichtung nach der Erzeugung der CRC-Ausnahme durch die elektronische Vorrichtung umfasst:
Ändern des ersten Bezeichners in der ersten Liste durch den EC (210) in einen zweiten Bezeichner, wobei der zweite Bezeichner das Display (194) angibt, das den ersten Modellinformationen entspricht, um die PSR-Funktion zu deaktivieren;
Setzen des ersten Flag-Bits durch den EC (210) auf einen zweiten Wert; und
Erstellen eines zweiten Anzeigetreibers durch das BIOS basierend auf einem zweiten Parameter, wenn das erste Flag-Bit auf den zweiten Wert gesetzt ist, wobei der zweite Anzeigetreiber konfiguriert ist, um das erste Display so zu steuern, dass es eine feste Bildwiederholrate verwendet.

6. Verfahren nach Anspruch 5, wobei das Verfahren nach dem Generieren der CRC-Ausnahme durch die elektronische Vorrichtung und dem Deaktivieren der PSR-Funktion ferner umfasst:
Wiederherstellen des zweiten Identifikators in der ersten Liste auf den ersten Identifikator, nachdem N aufeinanderfolgende erste Bildrahmen die CRC bestehen;
Einstellen des ersten Flag-Bits auf den ersten Wert durch den EC (210); und
Erstellen des ersten Anzeigetreibers durch das BIOS basierend auf dem ersten Parameter, wenn das erste Flag-Bit auf den ersten Wert gesetzt ist, wobei der erste Anzeigetreiber dazu konfiguriert ist, das erste Display (194) so zu steuern, dass es eine variable Bildwiederholrate verwendet.

7. Verfahren nach Anspruch 5, wobei das Verfahren nach dem Erhalten der ersten Informationen von dem ersten Display (194) ferner umfasst: Speichern der ersten Informationen in einem ersten Speicherbereich; und
nach dem Neustart der elektronischen Vorrichtung umfasst das Verfahren ferner: Erhalten der ersten Informationen durch den EC (210) aus dem ersten Speicherbereich, wenn die ersten Informationen nicht von dem ersten Display (194) erhalten werden können;
Einstellen des Wertes des ersten Flag-Bits auf den ersten Wert durch den EC (210), wenn die ersten Informationen mit den ersten Modellinformationen in der ersten Liste übereinstimmen; und
Erstellen des ersten Anzeigetreibers durch das BIOS basierend auf dem ersten Parameter, wenn das erste Flag-Bit der erste Wert ist, wobei der erste Anzeigetreiber dazu konfiguriert ist, das erste Display (194) so zu steuern, dass es eine variable Bildwiederholrate verwendet.

8. Verfahren nach Anspruch 5, wobei die elektronische Vorrichtung kommunikativ mit einem Cloud-Server verbunden ist und das Verfahren ferner umfasst:
wenn eine zweite Liste vom Cloud-Server erhalten wird, Bestimmen der ersten Modellinformationen, die mit der elektronischen Vorrichtung übereinstimmen, der zweiten Modellinformationen, des ersten Identifikators und eines dritten Identifikators durch den EC (210) in der zweiten Liste, wobei die zweiten Modellinformationen Modellinformationen einer anderen Anzeige sind, die an die elektronische Vorrichtung angepasst ist, und der dritte Identifikator angibt, ob die der zweiten Modellinformation entsprechende Display die PSR-Funktion aktivieren soll; und
Generieren einer neuen ersten Liste durch den EC (210) basierend auf den ersten Modellinformationen, den zweiten Modellinformationen, dem ersten Identifikator und dem dritten Identifikator in der zweiten Liste.

9. Verfahren nach Anspruch 8, wobei das Verfahren vor dem Generieren einer neuen ersten Liste ferner umfasst:
nachdem das erste Display (194) der elektronischen Vorrichtung auf ein zweites Display geändert wurde, Bestimmen durch die EC (210), dass sich zweite Informationen, die von dem zweiten Display erhalten wurden, von den ersten Informationen unterscheiden, die in einem ersten Speicherbereich gespeichert sind, wobei die zweiten Informationen Modellinformationen sind, die in dem zweiten Display vorab gespeichert sind.

10. Verfahren nach einem der Ansprüche 1-9, wobei das Verfahren, nachdem das erste Display (194) der elektronischen Vorrichtung auf ein zweites Display geändert wurde, ferner umfasst:
Anzeigen der ersten Schnittstelle als Reaktion auf eine Benutzeroperation;
Anzeigen der ersten Gruppe von Bildrahmen in der ersten Schnittstelle innerhalb eines neunten Zeitraums durch die elektronische Vorrichtung, wobei eine Bildwiederholrate des zweiten Displays innerhalb des neunten Zeitraums eine vierte Bildwiederholrate ist;
Anzeigen der zweiten Schnittstelle als Reaktion auf eine Benutzeroperation nach dem neunten Zeitraum; und
Anzeigen der zweiten Gruppe von Bildrahmen in der zweiten Schnittstelle innerhalb eines zehnten Zeitraums durch die elektronische Vorrichtung, wobei eine Bildwiederholrate des zweiten Displays innerhalb des zehnten Zeitraums die vierte Bildwiederholrate ist und das zweite Display die PSR-Funktion nicht unterstützt.

11. Elektronische Vorrichtung, wobei die elektronische Vorrichtung einen oder mehrere Prozessoren und einen Speicher umfasst; und der Speicher mit dem Prozessor gekoppelt ist, der Speicher konfiguriert ist, um Computerprogrammcode zu speichern, der Computerprogrammcode Computerbefehle umfasst, und wenn der eine oder die mehreren Prozessoren die Computerbefehle ausführen, der eine oder die mehreren Prozessoren konfiguriert sind, um das Verfahren nach einem der Ansprüche 1-10 durchzuführen.

12. Computerspeichermedium, umfassend Computerbefehle, wobei, wenn die Computerbefehle auf einer elektronischen Vorrichtung ausgeführt werden, die elektronische Vorrichtung dazu befähigt wird, das Verfahren nach einem der Ansprüche 1-10 durchzuführen.

## Revendications

1. Procédé de commande d'affichage, appliqué à un dispositif électronique, dans lequel le dispositif électronique comprend un premier écran, le premier écran (194) prend en charge une fonction de rafraîchissement automatique du panneau, PSR, et le procédé comprend :
la surveillance, par le dispositif électronique, de l'apparition d'une erreur de contrôle d'intégrité, CRC, dans la transmission de données d'images entre une unité de traitement graphique, GPU, (110) du dispositif électronique et le premier écran afin de détecter une erreur CRC dans la transmission de données ; dans lequel le dispositif électronique est configuré, lorsque la fonction PSR est activée, si une erreur CRC dans la transmission de données se produit, pour déclencher le premier écran afin d'effectuer un processus d'auto-vérification, et dans le processus d'auto-vérification, le premier écran redémarre, provoquant ainsi un scintillement d'écran noir ;
dans lequel le procédé comprend en outre :
l'affichage d'une première interface en réponse à une opération d'un utilisateur ;
l'affichage, par le dispositif électronique, au cours d'une première période, pendant laquelle aucune erreur CRC dans la transmission de données n'est détectée, d'un premier groupe de trames d'images dans la première interface, dans lequel toutes les trames d'images du premier groupe de trames d'images ont le même contenu, et
l'activation, par le dispositif électronique, de la fonction PSR pour commander une fréquence de rafraîchissement du premier écran (194) au cours de la première période afin qu'elle soit une première fréquence de rafraîchissement ;
l'affichage d'une seconde interface en réponse à une opération de l'utilisateur après la première période ;
l'affichage, par le dispositif électronique, au cours d'une seconde période, pendant laquelle aucune erreur CRC dans la transmission de données n'est détectée, d'un second groupe de trames d'images dans la seconde interface, dans lequel une pluralité de trames d'images du second groupe de trames d'images ont un contenu différent, et la fréquence de rafraîchissement du premier écran (194) au cours de la seconde période est une seconde fréquence de rafraîchissement, et la seconde fréquence de rafraîchissement est supérieure à la première fréquence de rafraîchissement ;
dans lequel le procédé comprend en outre :
l'affichage de la première interface en réponse à une opération de l'utilisateur après la seconde période ;
affichage, par le dispositif électronique, du premier groupe de trames d'images dans la première interface au cours d'une troisième période temporelle, où pendant la troisième période temporelle, le dispositif électronique est situé dans un espace dans lequel un premier signal d'interférence électromagnétique existe et le procédé comprend la génération, par le dispositif électronique, d'une exception CRC de vérification d'intégrité en réponse à la détection d'une erreur CRC dans la transmission de données entre le GPU (110) et le premier écran (194) causée par le premier signal d'interférence électromagnétique, et comprend en outre, par le dispositif électronique, la désactivation de la fonction PSR en réponse à l'exception CRC, et le contrôle de la fréquence de rafraîchissement du premier écran au cours de la troisième période temporelle pour qu'elle soit une troisième fréquence de rafraîchissement ;
affichage de la deuxième interface en réponse à une opération de l'utilisateur après la troisième période temporelle ; et
affichage, par le dispositif électronique, du deuxième groupe de trames d'images dans la deuxième interface au cours d'une quatrième période temporelle, et contrôle de la fréquence de rafraîchissement du premier écran au cours de la quatrième période temporelle pour qu'elle soit la troisième fréquence de rafraîchissement, où pendant la quatrième période temporelle, le dispositif électronique est situé dans l'espace dans lequel le premier signal d'interférence électromagnétique existe ;
où le procédé comprend en outre :
affichage de la première interface en réponse à une opération de l'utilisateur après la quatrième période temporelle ;
affichage, par le dispositif électronique, du premier groupe de trames d'images dans la première interface au cours d'une cinquième période temporelle, où pendant la cinquième période temporelle, le dispositif électronique n'est plus situé dans l'espace dans lequel le premier signal d'interférence électromagnétique existe, et le procédé comprend le maintien, par le dispositif électronique, de la fonction PSR dans un état désactivé et le contrôle de la fréquence de rafraîchissement du premier écran au cours de la cinquième période temporelle pour avoir la troisième fréquence de rafraîchissement en réponse à la détermination que le dispositif électronique n'est plus situé dans l'espace dans lequel le premier signal d'interférence électromagnétique existe ;
affichage de la deuxième interface en réponse à une opération de l'utilisateur après la cinquième période temporelle ; et
affichage, par le dispositif électronique, du deuxième groupe de trames d'images dans la deuxième interface au cours d'une sixième période temporelle, où pendant la sixième période temporelle, le dispositif électronique n'est plus situé dans l'espace dans lequel le premier signal d'interférence électromagnétique existe, et le procédé comprend le contrôle de la fréquence de rafraîchissement du premier écran au cours de la sixième période temporelle pour qu'elle soit la troisième fréquence de rafraîchissement.

2. Procédé selon la revendication 1, **caractérisé en ce qu'**après que le dispositif électronique génère l'exception CRC, le procédé comprend en outre :
affichage d'une troisième interface (301) en réponse à une première opération de l'utilisateur, dans laquelle la troisième interface comprend une option cible, l'option cible (308) indique d'activer la fonction PSR, et l'option cible est non sélectionnable.

3. Procédé selon la revendication 1, dans lequel après que le dispositif électronique génère l'exception CRC et désactive la fonction PSR, le procédé comprend en outre :
l'activation, par le dispositif électronique, de la fonction PSR après que N premières trames d'images consécutives réussissent le CRC, dans lequel la première trame d'images est une donnée d'affichage envoyée par le GPU (110) dans le dispositif électronique vers le premier écran (194), et N est un entier positif supérieur à 0.

4. Procédé selon la revendication 1, dans lequel le dispositif électronique comprend en outre un contrôleur embarqué, EC, (210) et un système de base d'entrée/sortie, BIOS, une première liste est configurée dans le dispositif électronique, la première liste comprend des premières informations de modèle et un premier identifiant, les premières informations de modèle sont des informations de modèle du premier écran (194) du dispositif électronique, et le premier identifiant indique que la fonction PSR est activée pour l'écran correspondant aux premières informations de modèle ; et avant l'affichage d'une première interface en réponse à une opération d'un utilisateur, le procédé comprend en outre :
l'obtention, par l'EC (210), de premières informations à partir du premier écran (194) après la mise sous tension du dispositif électronique, dans lequel les premières informations sont des informations de modèle préstockées dans le premier écran ;
le réglage, par l'EC (210), d'une valeur d'un premier bit de drapeau à une première valeur lorsque les premières informations correspondent aux premières informations de modèle dans la première liste ; et
la création, par le BIOS, d'un premier pilote d'affichage basé sur un premier paramètre lorsque le premier bit de drapeau est la première valeur, dans lequel le premier pilote d'affichage est configuré pour commander au premier écran (194) d'utiliser une fréquence de rafraîchissement variable.

5. Procédé selon la revendication 4, dans lequel la désactivation, par le dispositif électronique, de la fonction PSR après que le dispositif électronique génère l'exception CRC comprend :
le changement, par l'EC (210), du premier identifiant dans la première liste en un deuxième identifiant, dans lequel le deuxième identifiant indique à l'écran (194) correspondant aux premières informations de modèle de désactiver la fonction PSR ;
le réglage, par l'EC (210), du premier bit de drapeau à une deuxième valeur ; et
la création, par le BIOS, d'un deuxième pilote d'affichage basé sur un deuxième paramètre lorsque le premier bit de drapeau est réglé sur la deuxième valeur, dans lequel le deuxième pilote d'affichage est configuré pour indiquer au premier écran d'utiliser une fréquence de rafraîchissement fixe.

6. Procédé selon la revendication 5, dans lequel, après que le dispositif électronique génère l'exception CRC et désactive la fonction PSR, le procédé comprend en outre :
la restauration du second identifiant dans la première liste vers le premier identifiant après que N trames d'images premières consécutives réussissent le CRC ;
le réglage, par l'EC (210), du premier bit de drapeau à la première valeur ; et
la création, par le BIOS, du premier pilote d'affichage basé sur le premier paramètre lorsque le premier bit de drapeau est réglé sur la première valeur, dans lequel le premier pilote d'affichage est configuré pour commander le premier écran (194) afin d'utiliser une fréquence de rafraîchissement variable.

7. Procédé selon la revendication 5, dans lequel, après l'obtention des premières informations depuis le premier écran (194), le procédé comprend en outre : le stockage des premières informations dans une première zone de stockage ; et
après le redémarrage du dispositif électronique, le procédé comprend en outre : l'obtention, par l'EC (210), des premières informations depuis la première zone de stockage lorsque les premières informations n'ont pas pu être obtenues depuis le premier écran (194) ;
le réglage, par l'EC (210), de la valeur du premier bit de drapeau à la première valeur lorsque les premières informations correspondent aux premières informations de modèle dans la première liste ; et
la création, par le BIOS, du premier pilote d'affichage basé sur le premier paramètre lorsque le premier bit de drapeau est à la première valeur, dans lequel le premier pilote d'affichage est configuré pour commander le premier écran (194) afin d'utiliser une fréquence de rafraîchissement variable.

8. Procédé selon la revendication 5, dans lequel le dispositif électronique est connecté de manière communicative à un serveur cloud, et le procédé comprend en outre :
lorsqu'une seconde liste est obtenue depuis le serveur cloud, la détermination, par l'EC (210) dans la seconde liste, des premières informations de modèle qui correspondent au dispositif électronique, des secondes informations de modèle, du premier identifiant et d'un troisième identifiant, dans lequel les secondes informations de modèle sont des informations de modèle d'un autre écran adapté au dispositif électronique, et le troisième identifiant indique si l'écran correspondant aux secondes informations de modèle doit activer la fonction PSR ; et
la génération, par l'EC (210), d'une nouvelle première liste basée sur les premières informations de modèle, les secondes informations de modèle, le premier identifiant et le troisième identifiant dans la seconde liste.

9. Procédé selon la revendication 8, dans lequel, avant la génération d'une nouvelle première liste, le procédé comprend en outre :
après que le premier affichage (194) du dispositif électronique est passé à un second affichage, déterminer, par l'EC (210), que des secondes informations obtenues à partir du second affichage sont différentes des premières informations stockées dans une première zone de stockage, dans lequel les secondes informations sont des informations de modèle préstockées dans le second écran.

10. Procédé selon l'une quelconque des revendications 1 à 9, dans lequel, après que le premier écran (194) du dispositif électronique est passé à un second écran, le procédé comprend en outre :
afficher la première interface en réponse à une opération de l'utilisateur ;
afficher, par le dispositif électronique, le premier groupe de trames d'images dans la première interface au cours d'une neuvième période de temps, dans lequel une fréquence de rafraîchissement du second écran au cours de la neuvième période de temps est une quatrième fréquence de rafraîchissement ;
afficher la seconde interface en réponse à une opération de l'utilisateur après la neuvième période de temps ; et
afficher, par le dispositif électronique, le second groupe de trames d'images dans la seconde interface au cours d'une dixième période de temps, dans lequel une fréquence de rafraîchissement du second écran au cours de la dixième période de temps est la quatrième fréquence de rafraîchissement, et le second écran ne prend pas en charge la fonction PSR.

11. Dispositif électronique, dans lequel le dispositif électronique comprend un ou plusieurs processeurs et une mémoire ; et la mémoire est couplée au processeur, la mémoire est configurée pour stocker un code de programme informatique, le code de programme informatique comprend des instructions informatiques, et lorsque les un ou plusieurs processeurs exécutent les instructions informatiques, les un ou plusieurs processeurs sont configurés pour mettre en œuvre le procédé selon l'une quelconque des revendications 1 à 10.

12. Support de stockage informatique, comprenant des instructions informatiques, dans lequel, lorsque les instructions informatiques sont exécutées sur un dispositif électronique, le dispositif électronique est activé pour mettre en œuvre le procédé selon l'une quelconque des revendications 1 à 10.
